# EUROPEAN PATENT SPECIFICATION

(11) **EP 3 684 030 B1**
(45) Date of publication and mention of the grant of the patent: **24.11.2021**
(21) Application number: 18867840.3
(22) Date of filing: 11.06.2018
(51) Int. Cl.: H04L 29/08, H04L 29/12

(54) **DATA TRANSMISSION METHOD, SERVER, UNLOADING CARD, AND STORAGE MEDIUM**
DATENÜBERTRAGUNGSVERFAHREN, SERVER, ENTLADEKARTE UND SPEICHERMEDIUM
PROCÉDÉ DE TRANSMISSION DE DONNÉES, SERVEUR, CARTE DE DÉCHARGEMENT ET SUPPORT DE STOCKAGE

(30) Priority: 20.10.2017 CN 201710991615
(43) Date of publication of application: 22.07.2020
(73) Proprietor: Huawei Technologies Co., Ltd., Longgang District Shenzhen, Guangdong 518129 (CN)
(72) Inventor: ZHANG, Wei, Shenzhen, Guangdong 518129 (CN); LIU, Hongguang, Shenzhen, Guangdong 518129 (CN); CHEN, Junjie, Shenzhen, Guangdong 518129 (CN)
(74) Representative: Maiwald Patent- und Rechtsanwaltsgesellschaft mbH
(86) International application number: PCT/CN2018/090595
(87) International publication number: WO 2019/076068

(56) References cited:
- CN-A- 103 595 648
- CN-A- 104 395 895
- CN-A- 104 767 838
- US-A1- 2013 346 665
- US-A1- 2015 052 280

## Description

### TECHNICAL FIELD

The present invention relates to the field of communications technologies, and in particular, to a data transmission method, a server, an offload card, and a storage medium.

### BACKGROUND

In a cloud scenario, to improve a processing speed of an input/output (Input/Output, I/O) service, an operator may offload some I/O services in a server to low-cost heterogeneous hardware for execution. In this way, a resource of a central processing unit (Central Processing Unit, CPU) of the server may be released, and running efficiency of the CPU is improved. The heterogeneous hardware used to offload the I/O service is usually referred to as an offload card. The offload card may be a single peripheral component interconnect express (Peripheral Component Interconnect Express, PCIE) card, and a PCIE channel is established between the offload card and the server. When processing the I/O service offloaded to the offload card, the server transmits data to the offload card for processing through the PCIE channel. The PCIE channel is mainly used for communication of the I/O service.

The management node is a device for managing the server and the offload card. The management node is connected to the server. When managing the server, the management node directly sends a server management request to the server, to manage and configure the server. When managing the offload card, the management node manages the offload card by using a management agent that is of the offload card and that is set in the server. A specific implementation of managing the offload card by the management node is as follows: A management interface is disposed in the offload card, after receiving an offload card management request, the server invokes the management agent to send the offload card management request to the offload card through the PCIE channel, and the offload card receives, through the management interface, the offload card management request sent by the server.

Because the PCIE channel is mainly used for communication of the I/O service, if the management agent in the server transmits the offload card management request to the offload card through the PCIE channel, bandwidth of the PCIE channel needs to be occupied. Consequently, bandwidth that is of the PCIE channel and that is used to transmit data of the I/O service between the server and the offload card is reduced, resulting in decrease of transmission efficiency of the data of the I/O service, and further resulting in decrease of processing efficiency of the I/O service. In addition, maintenance of the management agent in the server is complex, and operation and maintenance workload is heavy. Invocation of the management agent also occupies the resource of the CPU of the server. This affects running efficiency of the CPU.

CN10355648 discloses a method and system for balancing load receiving side of a server.

US 2015/052280 A1 describes a method for communications-stack offload to a hardware controller.

### SUMMARY

This application provides a data transmission method, a host, an offload card, and a storage medium, to improve transmission efficiency of data of an I/O service between a server and the offload card, and improve running efficiency of a CPU of the server.

According to a first aspect, this application provides a data transmission method, applied to a server. The method includes: receiving, by the server, a management request sent by a communications device, where the management request is sent by a management node to the communications device, the management request includes a first destination MAC address and a first source MAC address, the first destination MAC address is a MAC address of the server, and the first source MAC address is a MAC address of the management node; after the server receives the management request, determining whether the management request is to be processed by an offload card; when the server determines that the management request is to be processed by the offload card, updating, by the server, the management request, and obtaining an updated management request, where the first destination MAC address in the updated management request is a MAC address of the offload card, and the first source MAC address in the updated management request is the MAC address of the server; and sending, by the server, the obtained updated management request to the communications device.

In this application, after receiving, by using the communications device, the management request sent by the management node, the server may determine whether the management request needs to be processed by the offload card. If the management request is a management request that needs to be processed by the offload card, the server updates the source MAC address and the destination MAC address that are in the management request, and sends the updated management request to the communications device. Because the source MAC address in the updated management request is the MAC address of the server, and the destination MAC address in the updated management request is the MAC address of the offload card, the communications device may send the updated management request to the offload card, so that the offload card processes the management request. In this way, the server sends the updated management request by using the communications device, and does not need to occupy bandwidth of a PCIE channel between the server and the offload card, thereby improving efficiency of transmitting data of an I/O service on the PCIE channel, and further improving processing efficiency of the I/O service. In addition, a management agent does not need to be set in the server, so that resource occupation of a CPU of the server is reduced, and running efficiency of the CPU of the server is improved.

In a possible implementation of the first aspect, the management request further includes a first data flow feature; and the determining, by the server, whether the management request is to be processed by an offload card includes: when the server determines that the first data flow feature is a data flow feature of the offload card, determining that the management request is to be processed by the offload card.

In another possible implementation of the first aspect, the method further includes: receiving, by the server, an offload card response message sent by the communications device, where the offload card response message includes a second destination MAC address and a second source MAC address, the second destination MAC address is the MAC address of the server, and the second source MAC address is the MAC address of the offload card; after the server receives the offload card response message, determining whether the offload card response message is response information sent by the offload card; when the offload card response message is the response information sent by the offload card, updating, by the server, the offload card response message, and obtaining an updated offload card response message, where the second destination MAC address in the updated offload card response message is the MAC address of the management node, and the second source MAC address in the updated offload card response message is the MAC address of the server; and sending, by the server, the updated offload card response message to the communications device.

In another possible implementation of the first aspect, the offload card response message further includes a second data flow feature; and the determining, by the server, whether the offload card response message is response information sent by the offload card includes: when the server determines that the second data flow feature is the data flow feature of the offload card, determining that the offload card response message is the response information sent by the offload card.

In another possible implementation of the first aspect, before the determining, by the server, whether the management request is to be processed by an offload card, the method further includes: receiving, by the server, a data flow feature message sent by the communications device, where the data flow feature message includes the data flow feature of the offload card; and saving, by the server, the received data flow feature of the offload card.

In another possible implementation of the first aspect, the data flow feature of the offload card indicates that the management request is to be processed by the offload card, and the data flow feature of the offload card includes a port number of the offload card and/or an identifier of an offloading management service.

According to a second aspect, this application provides a data transmission method, applied to an offload card, where the offload card includes a virtual switch and a processor, the method is performed by the virtual switch, and the method includes: receiving, by the virtual switch, a management request sent by a management node, where the management request includes a destination MAC address, and the destination MAC address is a MAC address of a server; after the virtual switch receives the management request, determining whether the management request is to be processed by the offload card; when the virtual switch determines that the management request is to be processed by the offload card, updating, by the virtual switch, the management request, and obtaining an updated management request, where the destination MAC address in the updated management request is a MAC address of the offload card; and sending, by the virtual switch, the updated management request to the processor.

In this application, the offload card includes the virtual switch. After receiving the management request sent by the management node, the virtual switch determines whether the management request needs to be processed by the offload card. If the management request is a management request that needs to be processed by the offload card, the virtual switch updates the destination MAC address in the management request to the MAC address of the offload card, and sends the updated management request to the processor in the offload card for processing. In this case, the virtual switch receives the management request sent by the management node, and when determining that the management request needs to be processed by the offload card, sends the updated management request to the offload card for processing, thereby preventing the management request from being transmitted through a PCIE channel between the server and the offload card, improving efficiency of transmitting data of an I/O service on the PCIE channel, and further improving processing efficiency of the I/O service. In addition, a management agent does not need to be set in the server, so that resource occupation of a CPU of the server is reduced, and running efficiency of the CPU of the server is improved.

In a possible implementation of the second aspect, the management request further includes a first data flow feature; and the determining, by the virtual switch, whether the management request is to be processed by an offload card includes: when the virtual switch determines that the first data flow feature is a data flow feature of the offload card, determining that the management request is to be processed by the offload card.

In another possible implementation of the second aspect, the method further includes: receiving, by the virtual switch, an offload card response message, where the offload card response message includes a source MAC address, and the source MAC address is the MAC address of the offload card; determining, by the virtual switch, whether the offload card response message is response information sent by the offload card; when the offload card response message is the response information sent by the offload card, updating, by the virtual switch, the offload card response message, and obtaining an updated offload card response message, where the source MAC address in the updated offload card response message is the MAC address of the server; and sending, by the virtual switch, the updated offload card response message to the management node.

In another possible implementation of the second aspect, the offload card response message further includes a second data flow feature; and the determining, by the virtual switch, whether the offload card response message is response information sent by the offload card includes: when the virtual switch determines that the second data flow feature is the data flow feature of the offload card, determining that the offload card response message is the response information sent by the offload card.

In another possible implementation of the second aspect, before the determining, by the virtual switch, whether the management request is to be processed by an offload card, the method further includes: receiving, by the virtual switch, a data flow feature message sent by the processor, where the data flow feature message includes the data flow feature of the offload card; and saving, by the virtual switch, the data flow feature of the offload card.

In another possible implementation of the second aspect, the data flow feature of the offload card indicates that the management request is to be processed by the offload card, and the data flow feature of the offload card includes a port number of the offload card and/or an identifier of an offloading management service.

According to a third aspect, this application provides a data transmission method, applied to an offload card. The method includes:
receiving, by the offload card, a management request sent by a management node;
determining, by the offload card, whether the management request is to be processed by the offload card; and
when determining that the management request is not to be processed by the offload card, sending, by the offload card, the management request to the server.

In this application, after receiving the management request sent by the management node, the offload card determines whether the management request needs to be processed by the offload card. If the management request is not a management request that needs to be processed by the offload card, the management request is sent to the server for processing. In this way, a management request that needs to be processed by the server is determined by the offload card and is sent to the server. A processing process does not occupy a resource of a CPU of the server, thereby improving running efficiency of the CPU of the server.

In a possible implementation of the third aspect, the management request further includes a first data flow feature; and the determining, by the offload card, whether the management request is to be processed by the offload card includes: when the first data flow feature is not a data flow feature of the offload card, determining, by the offload card, that the management request is not to be processed by the offload card.

In another possible implementation of the third aspect, the method further includes: receiving, by the offload card, a server response message sent by the server; determining, by the offload card, whether the server response message is information sent by the server in response to the management request; and when the server response message is the information sent by the server in response to the management request, sending, by the offload card, the server response message to the management node.

In another possible implementation of the third aspect, the server response message further includes a second data flow feature; and the determining, by the offload card, whether the server response message is information sent by the server in response to the management request includes: when the second data flow feature is not the data flow feature of the offload card, determining that the server response message is the information sent by the server in response to the management request.

In another possible implementation of the third aspect, the data flow feature of the offload card indicates that the management request is to be processed by the offload card, and the data flow feature of the offload card includes a port number of the offload card and/or an identifier of an offloading management service.

According to a fourth aspect, this application provides a server. The server includes modules configured to perform the data transmission method according to any one of the first aspect or the possible implementations of the first aspect, and the modules may be implemented by using hardware, or may be implemented by hardware executing corresponding software. The hardware or the software includes one or more modules corresponding to the foregoing function.

According to a fifth aspect, this application provides an offload card. The offload card includes a virtual switch. The virtual switch includes modules configured to perform the data transmission method according to any one of the second aspect or the possible implementations of the second aspect, and the modules may be implemented by using hardware, or may be implemented by hardware executing corresponding software. The hardware or the software includes one or more modules corresponding to the foregoing function.

According to a sixth aspect, this application provides an offload card. The offload card includes modules configured to perform the data transmission method according to any one of the third aspect or the possible implementations of the third aspect, and the modules may be implemented by hardware, or may be implemented by hardware executing corresponding software. The hardware or the software includes one or more modules corresponding to the foregoing function.

According to a seventh aspect, this application provides a server, including one or more processors, a memory, and a communications interface.

The memory and the communications interface are coupled to the one or more processors.

The memory is configured to store computer program code, where the computer program code includes an instruction, and when the one or more processors execute the instruction, the server is configured to perform the method according to any one of the first aspect or the possible implementations of the first aspect.

According to an eighth aspect, this application provides an offload card, including one or more processors, a memory, and a communications interface.

The memory and the communications interface are coupled to the one or more processors.

The memory is configured to store computer program code, where the computer program code includes an instruction, and when the one or more processors execute the instruction, the offload card is configured to perform the method according to any one of the second aspect or the possible implementations of the second aspect.

According to a ninth aspect, this application provides an offload card, including one or more processors, a memory, and a communications interface.

The memory and the communications interface are coupled to the one or more processors.

The memory is configured to store computer program code, where the computer program code includes an instruction, and when the one or more processors execute the instruction, the offload card is configured to perform the method according to any one of the third aspect or the possible implementations of the third aspect.

According to a tenth aspect, this application provides a data transmission system. The system includes a server and an offload card. The server is configured to perform the method according to any one of the first aspect or the possible implementations of the first aspect.

According to an eleventh aspect, this application provides a data transmission system. The system includes a server and an offload card, and the offload card includes a virtual switch and a processor. The server is connected to the virtual switch. The virtual switch is configured to perform the method according to any one of the second aspect or the possible implementations of the second aspect.

According to a twelfth aspect, this application provides a data transmission system. The system includes a server and an offload card. The server is connected to the offload card. The offload card is configured to perform the method according to any one of the third aspect or the possible implementations of the third aspect.

According to a thirteenth aspect, this application provides a computer-readable storage medium. The computer-readable storage medium stores an instruction, and when the instruction is run on a computer, the computer is enabled to perform the method according to any one of the first aspect or the possible implementations of the first aspect.

According to a fourteenth aspect, this application provides a computer-readable storage medium. The computer-readable storage medium stores an instruction, and when the instruction is run on a computer, the computer is enabled to perform the method according to any one of the second aspect or the possible implementations of the second aspect.

According to a fifteenth aspect, this application provides a computer-readable storage medium. The computer-readable storage medium stores an instruction, and when the instruction is run on a computer, the computer is enabled to perform the method according to any one of the third aspect or the possible implementations of the third aspect.

### BRIEF DESCRIPTION OF DRAWINGS

To describe technical solutions in embodiments of the present invention more clearly, accompanying drawings required for describing the embodiments are briefly described below.
FIG. 1 is a schematic diagram of a network architecture according to an embodiment of the present invention;
FIG. 2 is a schematic diagram of another network architecture according to an embodiment of the present invention;
FIG. 3 is a schematic block diagram of a server according to an embodiment of the present invention;
FIG. 4 is a schematic block diagram of an offload card according to an embodiment of the present invention;
FIG. 5 is a schematic flowchart of a data transmission method according to an embodiment of the present invention;
FIG. 6 is a schematic flowchart of a data transmission method according to another embodiment of the present invention;
FIG. 7 is a schematic flowchart of a data transmission method according to still another embodiment of the present invention;
FIG. 8 is a schematic block diagram of a server according to an embodiment of the present invention;
FIG. 9 is a schematic block diagram of a server according to another embodiment of the present invention;
FIG. 10 is a schematic block diagram of an offload card according to an embodiment of the present invention;
FIG. 11 is a schematic block diagram of an offload card according to another embodiment of the present invention; and
FIG. 12 is a schematic block diagram of an offload card according to still another embodiment of the present invention.

### DESCRIPTION OF EMBODIMENTS

Technical solutions according to embodiments of the present invention are clearly described below with reference to the accompanying drawings.

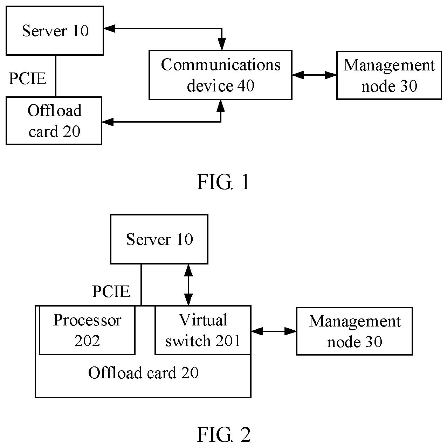

The embodiments of the present invention may be applied to a scenario in which a management node manages a server and an offload card. FIG. 1 is a schematic diagram of a network architecture according to an embodiment of the present invention. As shown in FIG. 1, a server 10 and an offload card 20 are included. The server 10 offloads some I/O services to the offload card 20 for processing, to improve running efficiency of a CPU of the server 10 and improve a processing speed of the I/O services. A PCIE channel is established between the server 10 and the offload card 20, and is used for I/O service communication. A management node 30 is a device for managing the server 10 and the offload card 20, and may be located in a same data center as the server 10 and the offload card 20. The management node 30 may communicate with the server 10 and the offload card 20 by using a peripheral communications device 40. The communications device 40 may be specifically a switch. For example, the communications device 40 has a transmission control protocol/IP data link layer (Transmission Control Protocol/IP Layer 2, L2) network switching function. In addition, the server 10 and the offload card 20 may further communicate with each other by using the communications device 40, for example, transmit management information.

In the network architecture shown in FIG. 1 provided in this embodiment of the present invention, the management node 30 is configured to assign IP addresses to the server 10 and the offload card 20. The server 10 and the offload card 20 may share one IP address. The server 10 enables an address resolution protocol (Address Resolution Protocol, ARP) response, and the offload card 20 disables an ARP response. Therefore, the management node 30 can sense existence of only the server 10, and the IP address of the server 10 is visible to the management node 30. The management node 30 communicates with the server 10 by using the IP address, and sends, by using the IP address, management requests used to manage the server 10 and the offload card 30.

In the network architecture shown in FIG. 1 provided in this embodiment of the present invention, the management node 30 is further configured to assign a MAC address to each of the server 10 and the offload card 20. The MAC address of the server 10 is visible to the management node 30. The management node 30 communicates with the server 10 by using the MAC address of the server. Because the management node 30 cannot sense existence of the offload card 20, the server 10 and the offload card 20 may share one IP address. After the management node 30 sends the management requests to the server 10, the server 10 may distinguish the management request to be sent to the server 10 for processing from the management request to be sent to the offload card 20 for processing, and forward, to the offload card by using the MAC address, the management request to be sent to the offload card 20 for processing.

FIG. 2 is a schematic diagram of another network architecture according to an embodiment of the present invention. As shown in FIG. 2, to improve running efficiency of a CPU of a server 10 and improve a processing speed of an I/O service, the server 10 offloads some I/O services to an offload card 20 for processing. A PCIE channel is established between the server 10 and the offload card 20 for I/O service communication. The management node 30 is a device for managing the server 10 and the offload card 20, and may be located in a same data center as the server 10 and the offload card 20. Compared with the network architecture shown in FIG. 1, in the network architecture shown in FIG. 2, an information transmission service of the communications device 40 shown in FIG. 1 is offloaded to the offload card 20 for execution, and a virtual switch 201 in the offload card 20 implements the information transmission service.

Specifically, the offload card 20 has a transmission control protocol/IP data link layer (Transmission Control Protocol/IP Layer 2, L2) network switching function, that is, the virtual switch 201 in the offload card 20 is configured to implement a function of a switch. The virtual switch 201 may communicate with the server 10 and the management node 30 by using a network interface of the offload card 20, so that data transmission is performed between the server 10 and the management node 30. The offload card 20 further includes a processor 202. The processor 202 may communicate with the server 10 and the management node 30 by using the virtual switch 201, to process management information and service data.

In the network architecture shown in FIG. 2 provided in this embodiment of the present invention, the management node 30 is configured to assign an IP address to each of the server 10 and the offload card 20. The server 10 and the offload card 20 share one IP address. The server 10 enables an address resolution protocol (Address Resolution Protocol, ARP) response, and the offload card 20 disables an ARP response. Therefore, the management node 30 can sense existence of only the server 10, and the IP address of the server 10 is visible to the management node 30. The management node 30 communicates with the offload card 20 by using the IP address, and sends, to the virtual switch 201 in the offload card 20 by using the IP address, management requests used to manage the server 10 and the offload card 20.

In the network architecture shown in FIG. 2 provided in this embodiment of the present invention, the management node 30 is further configured to assign a MAC address to each of the server 10 and the offload card 20. The MAC address of the server is visible to the management node 30. The management node 30 communicates with the server 10 by using the MAC address of the server. Because the management node 30 cannot sense existence of the offload card 20, the server 10 and the offload card 20 may share one IP address. After the management node 30 sends the management request to the offload card 20, the virtual switch 201 in the offload card 20 may distinguish the management request to be sent to the server 10 for processing from the management request sent to the offload card 20 for processing, and forward the management request to the server 10 or the processor 202 in the offload card 20.

In the network architecture shown in FIG. 1, the management node 30 sends the management request to the server 10 by using the communications device 40. A source MAC address in the management request is a MAC address of the management node 30, a destination MAC address in the management request is the MAC address of the server 10, and the management request includes a data flow feature. The data flow feature can identify a flow direction of a data flow or a processing object of a data flow. Because the management requests sent by the management node 30 include the management request to be sent to the server 10 and the management request to be sent to the offload card 20, the server 10 needs to determine the received management request, determine the management request to be sent to the offload card 20, and forward, by using the communications device 40 to the offload card 20 for processing, the management request to be sent to the offload card 20. In this embodiment of the present invention, data flow features are set in the server 10 in advance, that is, preset data flow features. The preset data flow features include a data flow feature of the offload card. After receiving the management request, the server 10 may determine, based on the preset data flow features, whether the data flow feature in the management request is the data flow feature of the offload card 20, to determine whether the management request needs to be sent to the offload card 20 for processing. When determining that the management request needs to be sent to the offload card 20 for processing, the server 10 updates the source MAC address in the management request to the MAC address of the server 10, updates the destination MAC address to the MAC address of the offload card 20, and then forwards an updated management request to the offload card 20 by using the communications device 40. The server 10 may receive, by using the communications device 40, the data flow feature of the offload card sent by the offload card 20, then save the data flow feature of the offload card, and use the saved data flow feature of the offload card as one of the preset data flow features. The preset data flow features in the server 10 may be specifically a preset data flow feature table. In this case, the server 10 may save the received data flow feature of the offload card to the preset data flow feature table.

In the network architecture shown in FIG. 2, the management node 30 sends the management request to the server 10 by using the virtual switch 201. A source MAC address in the management request is a MAC address of the management node 30, a destination MAC address in the management request is a MAC address of the server 10, and the management request includes a data flow feature. The data flow feature can identify a flow direction of a data flow or a processing object of a data flow. Because the management requests sent by the management node 30 include the management request to be sent to the server 10 and the management request to be sent to the offload card 20, the virtual switch 201 needs to determine the received management request, send, to the offload card 20 for processing, the management request to be sent to the offload card 20, and send, to the server 10 for processing, the management request to be sent to the server 10. In this embodiment of the present invention, data flow features are set in the virtual switch 201 in advance, that is, preset data flow features. The preset data flow features include a data flow feature of the offload card. After receiving the management request, the virtual switch 201 may determine, based on the preset data flow features, whether the data flow feature in the management request is the data flow feature of the offload card 20, to determine whether the management request needs to be sent to the offload card 20 for processing. When determining that the management request is a management request that needs to be processed by the offload card 20, the virtual switch 201 updates the destination MAC address in the management request to a MAC address of the offload card 20, and then sends an updated management request to the processor 202 in the offload card 20 for processing. When it is determined that the management request is not a management request that needs to be processed by the offload card 20, it indicates that the management request needs to be processed by the server 10, and the virtual switch 201 sends the management request to the server 10 for processing. The virtual switch 201 may save the data flow feature of the offload card by receiving the data flow feature of the offload card sent by the offload card 20, and use the saved data flow feature of the offload card as one of the preset data flow features. The preset data flow features in the virtual switch 201 may be specifically a preset data flow feature table. In this case, the virtual switch 201 may save the received data flow feature of the offload card to the preset data flow feature table.

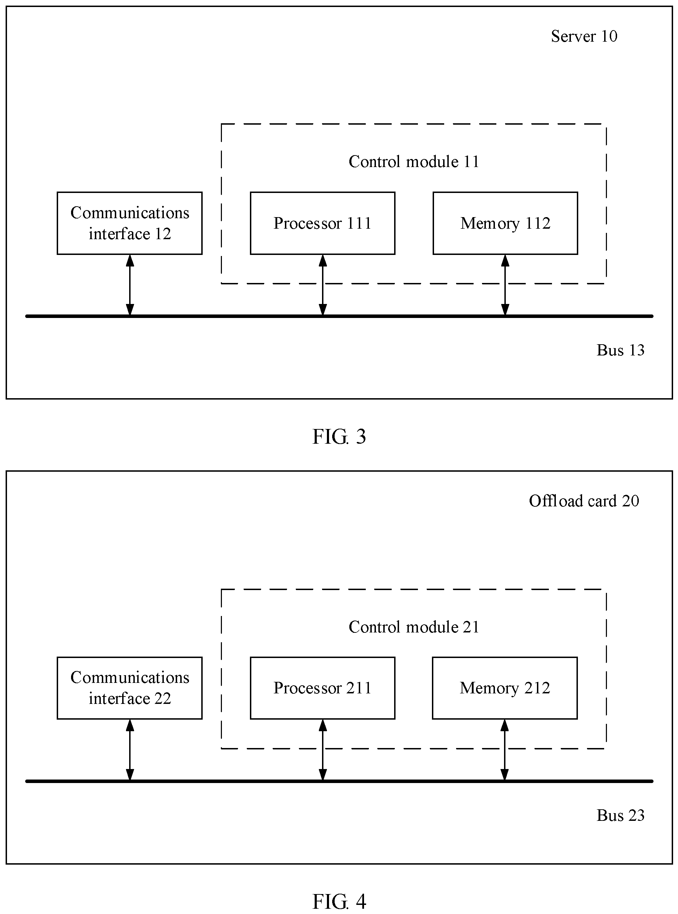

FIG. 3 is a schematic block diagram of a server 10 according to an embodiment of the present invention. The server 10 may include a control module 11, a communications interface 12, and a bus 13. The communications interface 12 is configured to communicate with a communications device 40, a virtual switch 201, or the like, for example, receive a management request. The control module 11 may receive, through the communications interface 12, service data and a management request that is used for management, and process the received service data and the management request that is used for management.

The control module 11 may include a processor 111 and a memory 112. The processor 111 is connected to the memory 112.

The processor 111 may be any computing device, or may be a general-purpose CPU, a microprocessor, a programmable controller, an application-specific integrated circuit (application-specific integrated circuit, ASIC), or one or more integrated circuits configured to control program execution.

The memory 112 may independently exist, and is connected to the processor 111 by using the bus 13. The memory 112 may alternatively be integrated with the processor 111. The memory 112 may be configured to store a software program and an application module. The processor 111 executes each operation instruction and processes response data by running the software program and the application module that are stored in the memory 112. The memory 112 mainly includes a program storage area. The program storage area may store an operating system and an application program required by at least one function, for example, an application program required for executing each operation instruction. In this embodiment of the present invention, the memory 112 may be configured to store preset data flow features. The preset data flow features include a data flow feature of an offload card, and may further include a data flow feature of the server.

As shown in FIG. 3, the processor 111, the memory 112, and the communications interface 12 may be connected to each other by using the bus 13.

A function of each part of the server 10 in the network architecture shown in FIG. 1 is described in detail below by using the structure of the server 10 shown in FIG. 3.

The processor 111 is configured to receive, through the communications interface 12, a management request sent by the communications interface. The management request is sent by a management node to the communications device 40. The management request includes a first destination MAC address and a first source MAC address. The first destination MAC address is a MAC address of the server 10, and the first source MAC address is a MAC address of the management node 30.

The processor 111 is further configured to: determine whether the management request is to be processed by an offload card 20; and when the server 10 determines that the management request is to be processed by the offload card 20, update the management request and obtain an updated management request, where the first destination MAC address in the updated management request is a MAC address of the offload card 20, and the first source MAC address in the updated management request is the MAC address of the server 10.

The processor 111 is further configured to send the updated management request to the communications device 40 through the communications interface 12. The updated management request is sent by the communications device 40 to the offload card 20.

In this way, the server 10 sends the updated management request by using the communications device 40, and does not need to occupy bandwidth of a PCIE channel between the server 10 and the offload card 20, thereby improving efficiency of transmitting data of an I/O service on the PCIE channel, and further improving processing efficiency of the I/O service. In addition, a management agent does not need to be set in the server 10, so that resource occupation of a CPU of the server 10 is reduced, and running efficiency of the CPU of the server 10 is improved.

In this embodiment of the present invention, the management request further includes a first data flow feature. The processor 111 is further configured to: when the server determines that the first data flow feature is the data flow feature of the offload card, determine that the management request is to be processed by the offload card.

In this embodiment of the present invention, the processor 111 is further configured to receive, through the communications interface 12, an offload card response message sent by the communications device 40. The offload card response message includes a second destination MAC address and a second source MAC address. The second destination MAC address is the MAC address of the server 10, and the second source MAC address is the MAC address of the offload card 20.

The processor 111 is further configured to: determine whether the offload card response message is response information sent by the offload card 20; and when the offload card response message is the response information sent by the offload card 20, update the offload card response message and obtain an updated offload card response message, where the second destination MAC address in the updated offload card response message is the MAC address of the management node 30, and the second source MAC address in the updated offload card response message is the MAC address of the server 10.

The processor 111 is further configured to send the updated offload card response message to the communications device 40 through the communications interface 12.

The server 10 receives, by using the communications device 40, the offload card response message sent by the offload card 20, after determining that the offload card response message is the response information sent by the offload card 20, updates the offload card response message, and sends the updated offload card response message to the management node 30 by using the communications device 40. Therefore, the server 10 may forward the offload card response message to the management node 30 without occupying the bandwidth of the PCIE channel between the server 10 and the offload card 20, thereby improving the efficiency of transmitting the data of the I/O service on the PCIE channel, and further improving the processing efficiency of the I/O service. In addition, a management agent does not need to be set in the server 10, so that resource occupation of a CPU of the server 10 is reduced, and running efficiency of the CPU of the server 10 is improved.

In this embodiment of the present invention, the offload card response message further includes a second data flow feature. The processor 111 is further configured to: when the server 10 determines that the second data flow feature is the data flow feature of the offload card 20, determine that the offload card response message is the response information sent by the offload card 20.

It should be noted that, in the network architecture shown in FIG. 2, the controller 111 in the server 10 is configured to: receive, through the communications interface 12, a management request sent by the virtual switch 201 in the offload card 20, and process the management request to obtain server response message in response to the management request. The controller 111 is further configured to send the server response message to the virtual switch 201 through the communications interface 12, so that the virtual switch 201 sends the server response message to the management node 30.

FIG. 4 is a schematic structural diagram of an offload card 20 according to an embodiment of the present invention. The offload card 20 may include a control module 21, a communications interface 22, and a bus 23. The communications interface 22 is configured to communicate with a management node 30, a server 10, or the like, for example, receive service data and a management request that is used for management. The control module 21 may receive, through the communications interface 22, the service data and the management request that is used for management, and process the received service data and the management request that is used for management.

The control module 21 may include a processor 211 and a memory 212. The processor 211 is connected to the memory 212.

The processor 211 may be any computing device, or may be a general-purpose CPU, a microprocessor, a programmable controller, an application-specific integrated circuit, or one or more integrated circuits configured to control program execution.

The memory 212 may independently exist, and is connected to the processor 211 by using the bus 23. The memory 212 may alternatively be integrated with the processor 211. The memory 212 may be configured to store a software program and an application module. The processor 211 executes each operation instruction and responds to data processing by running the software program and the application module that are stored in the memory 212. The memory 212 mainly includes a program storage area. The program storage area may store an operating system and an application program required by at least one function, for example, an application program required for executing each operation instruction. In this embodiment of the present invention, the memory 212 may be configured to store preset data flow features. The preset data flow features include a data flow feature of the offload card 20, and may further include a data flow feature of the server 10.

As shown in FIG. 4, the processor 211, the memory 212, and the communications interface 22 may be connected to each other by using the bus 23.

It should be noted that, in the network architecture shown in FIG. 1, the processor 211 in the offload card 20 is configured to: receive, through the communications interface 22, a management request sent by the communications device 40, and process the management request to obtain offload card response message in response to the management request. The controller 211 is further configured to send the offload card response message to the communications device 40 through the communications interface 22, so that the communications device 40 sends the offload card response message to the server 10.

In the network architecture shown in FIG. 2, the processor 211 may include a first control chip and a second control chip. The first control chip is configured to implement a function of the virtual switch 201, and the second control chip is configured to implement a function of the processor 202. Functions of the first control chip and the second control chip may be implemented by a same chip (for example, the general-purpose CPU, the microprocessor, or the programmable controller) or different chips. A specific implementation manner is not limited in this embodiment.

A function of each part of the offload card 20 in the network architecture shown in FIG. 2 is described in detail below by using the structure of the offload card 20 shown in FIG. 4.

The first control chip in the processor 211 is configured to receive, through the communications interface 22, a management request sent by the management node 30, where the management request includes a destination MAC address, and the destination MAC address is a MAC address of the server 10.

The first control chip in the processor 211 is further configured to: determine whether the management request is to be processed by the offload card 20; and when determining that the management request is to be processed by the offload card 20, update the management request and obtain an updated management request, where the destination MAC address in the updated management request is a MAC address of the offload card 20.

The first control chip in the processor 211 is further configured to send the updated management request to the second control chip in the processor 211.

In this case, the virtual switch 201 receives the management request sent by the management node 30, and sends the updated management request to the offload card 20 for processing when determining that the management request is to be processed by the offload card 20, thereby preventing the management request from being transmitted through a PCIE channel between the server 10 and the offload card 20, improving efficiency of transmitting data of an I/O service on the PCIE channel, and further improving processing efficiency of the I/O service. In addition, a management agent does not need to be set in the server 10, so that resource occupation of a CPU of the server 10 is reduced, and running efficiency of the CPU of the server 10 is improved.

In this embodiment of the present invention, the management request further includes a first data flow feature. The first control chip in the processor 211 is further configured to: when determining that the first data flow feature is the data flow feature of the offload card 20, determine that the management request is to be processed by the offload card 20.

In this embodiment of the present invention, the first control chip in the processor 211 is further configured to receive an offload card response message, where the offload card response message includes a source MAC address, and the source MAC address is the MAC address of the offload card 20.

The first control chip in the processor 211 is further configured to: determine whether the offload card response message is response information sent by the offload card 20; and when the offload card response message is the response information sent by the offload card 20, update the offload card response message and obtain an updated offload card response message, where the source MAC address in the updated offload card response message is the MAC address of the server 10.

The first control chip in the processor 211 is further configured to send the updated offload card response message to the management node 30 through the communications interface 12.

The first control chip in the processor 211 receives the offload card response message; and after determining that the offload card response information is the response information sent by the offload card 20, updates the offload card response information, and sends the updated offload card response message to the management node 30. Therefore, the offload card response information may be sent to the management node 30 without occupying bandwidth of the PCIE channel between the server and the offload card, thereby improving the efficiency of transmitting the data of the I/O service on the PCIE channel, and further improving the processing efficiency of the I/O service. In addition, a management agent does not need to be set in the server 10, so that resource occupation of a CPU of the server 10 is reduced, and running efficiency of the CPU of the server 10 is improved.

In this embodiment of the present invention, the offload card response message further includes a second data flow feature. The first control chip in the processor 211 is further configured to: when determining that the second data flow feature is the data flow feature of the offload card 20, determine that the offload card response message is the response information sent by the offload card 20.

In this embodiment of the present invention, the first control chip in the processor 211 is further configured to: after receiving the management request sent by the management node 30, determine whether the management request is to be processed by the offload card 20, and when the first data flow feature is not the data flow feature of the offload card 20, send the management request to the server 10 through the communications interface 22. In addition, the first control chip in the processor 211 is further configured to: after receiving a server response message through the communications interface 22, determine whether the server response message is information sent by the server 10 in response to the management request; and when the server response message is the information sent by the server in response to the management request, send the server response message to the management node. In this way, a process of transmitting management data between the management node 30 and the server 10 is implemented.

Specifically, when the management request further includes the first data flow feature, the first control chip in the processor 211 is specifically configured to: when the first data flow feature is not the data flow feature of the offload card 20, determine that the management request is not to be processed by the offload card 20. The server response message further includes the second data flow feature. The first control chip in the processor 211 is specifically configured to: when the second data flow feature is not the data flow feature of the offload card 20, determine that the server response message is the information sent by the server 10 in response to the management request.

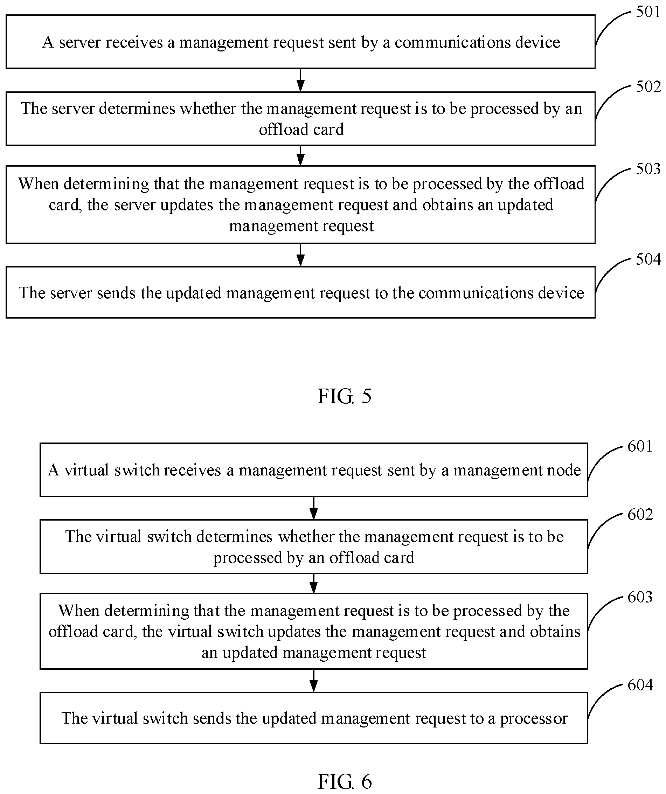

An embodiment of the present invention provides a data transmission method, applied to the server 10 in the network architecture shown in FIG. 1. Specifically, the method may be performed by the processor 111 in the server 10 shown in FIG. 3. As shown in FIG. 5, the method includes the following steps.

501. The server 10 receives a management request sent by a communications device.

The management request is sent by a management node 30 to the communications device. The management request includes a first destination MAC address and a first source MAC address. The first destination MAC address is a MAC address of the server 10, and the first source MAC address is a MAC address of the management node 30.

502. The server 10 determines whether the management request is to be processed by an offload card 20.

The management request sent by the management node 30 includes a management request to be processed by the offload card 20 or a management request to be processed by the server 10. Therefore, after receiving the management request, the server 10 needs to determine whether the management request is to be processed by the offload card 20.

Specifically, the management request may further include a first data flow feature. In this case, the server 10 may determine, based on preset data flow features, whether the first data flow feature is a data flow feature of the offload card 20, and determine whether the management request is to be processed by the offload card 20. When determining that the first data flow feature is the data flow feature of the offload card 20, the server 10 determines that the management request is to be processed by the offload card 20.

The preset data flow features may include the data flow feature of the offload card 20, and may further include a data flow feature of the server 10. Whether the management request is to be processed by the offload card 20 may be determined by determining, based on the preset data flow features, whether the first data flow feature is the data flow feature of the offload card 20, that is, whether the management request is to be sent to the offload card 20 for processing. Further, the management request may be sent to the offload card 20 when it is determined that the management request is to be sent to the offload card 20 for processing.

In an optional example of this embodiment of the present invention, the server 10 may receive in advance the data flow feature of the offload card 20 sent by the offload card 20, and then save the data flow feature of the offload card 20 as one of the preset data flow features.

In this embodiment of the present invention, the data flow feature of the offload card 20 indicates that the management request is to be processed by the offload card 20, and may indicate that the management request is to be processed by the offload card 20. Specifically, the data flow feature of the offload card 20 may include a port number of the offload card and/or an identifier of an offload card management service, and the like.

For example, if the offload card 20 sets that a data flow of a service between the offload card 20 and the management node 30 is transmitted through a port number identified as 6680, the management request in which a port number is 6680 is processed by the offload card 20. The preset data flow features of the server 10 include a feature indicating that a port number for the data flow is 6680. This indicates that the data flow for which the port number is 6680 is a data flow transmitted between the management node 30 and the offload card 20. After receiving the management request, the server 10 may match the port number in the management request with the preset data flow features. If the port number in the management request is 6680, it may be determined that the first data flow feature in the management request is the data flow feature of the offload card 20. This indicates that the management request needs to be processed by the offload card 20, and the server 10 needs to forward the management request to the offload card 20.

503. When determining that the management request is to be processed by the offload card 20, the server 10 updates the management request and obtains an updated management request.

The first source MAC address in the updated management request is the MAC address of the server 10, and the first destination MAC address is the MAC address of the management node 30.

After the server 10 matches the first data flow feature in the management request with the preset data flow features, if the first data flow feature is the data flow feature of the offload card 20, it indicates that the management request needs to be processed by the offload card 20. The server 10 updates the destination MAC address in the management request to a MAC address of the offload card 20, and updates the source MAC address to the MAC address of the server 10, so as to send the updated management request to the offload card 20 by using the communications device for processing.

In this embodiment of the present invention, the MAC address of the management node 30 is set to MAC0, the MAC address of the server 10 is set to MAC1, the MAC address of the offload card 20 is set to MAC2, an IP address of the management node 30 is set to 192.168.1.100, an IP address shared by the server 10 and the offload card 20 is set to 192.168.1.110, and the data flow feature of the offload card 20 includes a port number 6680. In this case, in step 501, in the management request received by the server 10, a source IP address is 192.168.1.100, the source MAC address is MAC0, a destination IP address is 192.168.1.110, the destination MAC address is MAC1, and the port number is 6680. In step 503, after the server 10 updates the management request, in the updated management request, the source IP address is 192.168.1.100, the source MAC address is MAC1, the destination IP address is 192.168.1.110, the destination MAC address is MAC2, and the port number is 6680.

It should be noted that, in the foregoing steps, if the server 10 determines that the first data flow feature is not the data flow feature of the offload card 20, it indicates that the management request received in step 501 needs to be processed by the server 10, so that the server 10 directly processes the management request.

504. The server 10 sends the updated management request to the communications device 40.

After the server 10 sends the updated management request to the communications device 40, the communications device 40 sends the updated management request to the offload card, so that the offload card 20 processes the updated management request.

In this embodiment of the present invention, after receiving, by using the communications device 40, the management request sent by the management node 30, the server 10 may determine whether the management request needs to be processed by the offload card 20. If the management request is a management request that needs to be processed by the offload card 20, the server 10 updates the source MAC address and the destination MAC address that are in the management request, and sends the updated management request to the communications device 40. Because the source MAC address in the updated management request is the MAC address of the server 10, and the destination MAC address in the updated management request is the MAC address of the offload card 20, the communications device 40 may send the updated management request to the offload card 20, so that the offload card 20 processes the management request. In this way, the server 10 sends the updated management request by using the communications device 40, and does not need to occupy bandwidth of a PCIE channel between the server 10 and the offload card 20, thereby improving efficiency of transmitting data of an I/O service on the PCIE channel, and further improving processing efficiency of the I/O service. In addition, a management agent does not need to be set in the server 10, so that resource occupation of a CPU of the server 10 is reduced, and running efficiency of the CPU of the server 10 is improved.

In an optional implementation of this embodiment of the present invention, the following process is included: The server 10 receives an offload card response message sent by the communications device 40; after receiving the offload card response message, the server 10 determines whether the offload card response message is response information sent by the offload card 20; when the offload card response message is the response information sent by the offload card 20, the server 10 updates the offload card response message and obtains an updated offload card response message; and the server 10 sends the updated offload card response message to the communications device 40.

The offload card response message includes a second destination MAC address and a second source MAC address. The second destination MAC address is the MAC address of the server 10, and the second source MAC address is the MAC address of the offload card 20.

After processing the management request forwarded by the server 10, the offload card 20 needs to return response information, that is, the offload card response message. The offload card 20 knows existence of only the server 10, and the server 10 sends the updated management request to the offload card 20 by using the communications device 40, and the offload card 20 returns the offload card response message to the server 10. In the management request received by the offload card 20, if the source IP address is 192.168.1.100, the source MAC address is MAC1, the destination IP address is 192.168.1.110, the destination MAC address is MAC2, and the port number is 6680, in the offload card response message returned by the offload card 20, the source IP address is 192.168.1.110, the source MAC address is MAC2, the destination IP address is 192.168.1.100, the destination MAC address is MAC1, and the port number is 6680.

After receiving the offload card response message, the server 10 may determine whether the offload card response message is response information sent by the offload card 20, in other words, whether the offload card response message needs to be forwarded to the management node 30; and if the offload card response message needs to be forwarded to the management node 30, updates the offload card response message and forwards an updated offload card response message by using the communications device 40.

Specifically, the offload card response message may further include a second data flow feature. After receiving the offload card response message returned by the offload card 20, the server 10 matches the second data flow feature included in the offload card response message with the preset data flow features, to determine whether the second data flow feature is the data flow feature of the offload card 20, thereby determining whether the offload card response message is the response information sent by the offload card 20. When the second data flow feature is the data flow feature of the offload card 20, it indicates that the offload card response message is the response information sent by the offload card 20, in other words, the offload card response message is sent by the offload card 20 to the management node 30. Therefore, the server 10 updates the offload card response message. The second destination MAC address in the updated offload card response message is the MAC address of the management node 30, and the second source MAC address in the updated offload card response message is the MAC address of the server 10, in other words, the destination MAC address in the offload card response message is updated to the MAC address of the management node 30, and the source MAC address in the offload card response message is updated to a MAC address of a host, so that the communications device 40 sends the offload card response message to the management node 30.

In this embodiment of the present invention, in the offload card response message received by the server 10, if the source IP address is 192.168.1.110, the source MAC address is MAC2, the destination IP address is 192.168.1.100, the destination MAC address is MAC1, and the port number is 6680, in the updated offload card response message, the source IP address is 192.168.1.110, the source MAC address is MAC1, the destination IP address is 192.168.1.100, the destination MAC address is MAC0, and the port number is 6680.

In this embodiment of the present invention, the server 10 receives, by using the communications device 40, the offload card response message sent by the offload card 20, after determining that the offload card response message is the response information sent by the offload card 20, updates the offload card response message, and sends the updated offload card response message to the management node 30 by using the communications device. Therefore, the server 10 may forwards the offload card response information to the management node 30 without occupying the bandwidth of the PCIE channel between the server 10 and the offload card 20, thereby improving the efficiency of transmitting the data of the I/O service on the PCIE channel, and further improving the processing efficiency of the I/O service. In addition, a management agent does not need to be set in the server 10, so that resource occupation of a CPU of the server 10 is reduced, and running efficiency of the CPU of the server 10 is improved.

Another embodiment of the present invention provides a data transmission method, applied to the virtual switch 201 included in the offload card 20 in the network architecture shown in FIG. 2. As shown in FIG. 6, the method includes the following steps.

601. The virtual switch 201 receives a management request sent by a management node 30.

The management request includes a destination MAC address. The destination MAC address is a MAC address of a server 10, and a source MAC address in the management request is a MAC address of the management node 30.

602. The virtual switch 201 determines whether the management request is to be processed by the offload card.

The management request sent by the management node 30 includes a management request to be processed by the offload card 20 or a management request to be processed by the server 10. Therefore, after receiving the management request, the virtual switch 201 needs to determine whether the management request is to be processed by the offload card 20.

The management request may further include a first data flow feature. In this case, the virtual switch 201 may determine, based on preset data flow features, whether the first data flow feature is a data flow feature of the offload card 20, and determine whether the management request is to be processed by the offload card 20. When determining that the first data flow feature is the data flow feature of the offload card 20, the virtual switch 201 determines that the management request is to be processed by the offload card 20.

The preset data flow features include the data flow feature of the offload card 20, and may further include a data flow feature of the server 10. Whether the management request is to be processed by the offload card 20 may be determined by determining, based on the preset data flow features, whether the first data flow feature is the data flow feature of the offload card 20, that is, whether the management request is to be sent to the offload card 20 for processing. Further, the management request may be sent to the offload card 20 when it is determined that the management request is to be sent to the offload card 20 for processing.

In an optional example of this embodiment of the present invention, the virtual switch 201 may receive in advance the data flow feature of the offload card 20 sent by the offload card 20, and save the data flow feature of the offload card 20 as one of the preset data flow features.

In this embodiment of the present invention, the data flow feature of the offload card 20 indicates that the management request is to be processed by the offload card 20, and may indicate that the management request is to be processed by the offload card 20. Specifically, the data flow feature of the offload card 20 may include a port number of the offload card and/or an identifier of an offload card management service, and the like.

For example, the offload card 20 may set that a data flow of a service between the offload card 20 and the management node 30 is transmitted through a port number identified as 6680, the management request in which a port number is 6680 is processed by the offload card 20. The preset data flow features include a feature indicating that a port number for the data flow is 6680. This indicates that the data flow for which the port number is 6680 is a data flow transmitted between the management node 30 and the offload card 20. After receiving the management request, the virtual switch 201 may match the port number in the management request with the preset data flow features. If the port number in the management request is 6680, it may be determined that the first data flow feature in the management request is the data flow feature of the offload card 20. This indicates that the management request needs to be processed by the offload card 20, and the virtual switch 201 needs to forward the management request to the offload card 20.

603. When determining that the management request is to be processed by the offload card 20, the virtual switch 201 updates the management request and obtains an updated management request.

The destination MAC address in the updated management request is a MAC address of the offload card 20.

After the virtual switch 201 matches the first data flow feature in the management request with a preset data flow table, if the first data flow feature is the data flow feature of the offload card 20, it indicates that the management request needs to be processed by the offload card 20. After updating the destination MAC address in the management request to the MAC address of the offload card 20, the virtual switch 201 sends the management request to the offload card 20 for processing.

In this embodiment of the present invention, the MAC address of the management node 30 is set to MAC0, the MAC address of the server 10 is set to MAC1, the MAC address of the offload card 20 is set to MAC2, an IP address of the management node 30 is set to 192.168.1.100, an IP address shared by the server 10 and the offload card 20 is set to 192.168.1.110, and a port number that needs to be included in the data flow feature of the offload card 20 is 6680. In this case, in step 601, in the management request received by the virtual switch 201, a source IP address is 192.168.1.100, the source MAC address is MAC0, a destination IP address is 192.168.1.110, the destination MAC address is MAC1, and the port number is 6680. In step 603, after the virtual switch 201 updates the management request, in the updated management request, the source IP address is 192.168.1.100, the source MAC address is MAC0, the destination IP address is 192.168.1.110, the destination MAC address is MAC2, and the port number is 6680.

It should be noted that, in the foregoing steps, if the virtual switch 201 determines that the first data flow feature is not the data flow feature of the offload card 20, it indicates that the management request received in step 601 needs to be processed by the server 10, so that the virtual switch 201 may directly send the management request to the server 10 for processing.

604. The virtual switch 201 sends the updated management request to a processor 202.

After updating the addresses in step 603, the virtual switch 201 sends the updated management request to the processor 202 in the offload card 20, so that the offload card 20 processes the updated management request.

In this embodiment of the present invention, the offload card 20 includes the virtual switch 201. After receiving the management request sent by the management node 30, the virtual switch 201 determines whether the management request needs to be processed by the offload card 20. If the management request is a management request that needs to be processed by the offload card 20, the virtual switch 201 updates the destination address in the management request to the MAC address of the offload card 20, and sends the updated management request to the processor in the offload card 20 for processing. In this case, the virtual switch 201 receives the management request sent by the management node 30, and sends the updated management request to the offload card 20 for processing when determining that the management request needs to be processed by the offload card 20, thereby preventing the management request from being transmitted through a PCIE channel between the server 10 and the offload card 20, improving efficiency of transmitting data of an I/O service on the PCIE channel, and further improving processing efficiency of the I/O service. In addition, a management agent does not need to be set in the server 10, so that resource occupation of a CPU of the server 10 is reduced, and running efficiency of the CPU of the server 10 is improved.

In an implementation of this embodiment of the present invention, the following process is further included: The virtual switch 201 receives an offload card response message; the virtual switch 201 determines whether the offload card response message is response information sent by the offload card 20; when the offload card response message is the response information sent by the offload card 20, the virtual switch 201 updates the offload card response message and obtains an updated offload card response message, where the source MAC address in the updated offload card response message is the MAC address of the server 10; and the virtual switch 201 sends the updated offload card response message to the management node 30.

The offload card response message includes the source MAC address, and the source MAC address is the MAC address of the offload card 20.

After processing the management request forwarded by the virtual switch 201, the offload card 20 needs to return response information, that is, the offload card response message. In the management request received by the offload card 20, if a source IP address is 192.168.1.100, the source MAC address is MAC0, a destination IP address is 192.168.1.110, the destination MAC address is MAC2, and the port number is 6680, in the offload card response message returned by the offload card 20, the source IP address is 192.168.1.110, the source MAC address is MAC2, the destination IP address is 192.168.1.100, the destination MAC address is MAC0, and the port number is 6680.

After receiving the offload card response message, the virtual switch 201 may determine whether the offload card response message is response information sent by the offload card 20, in other words, whether the offload card response message needs to be forwarded to the management node 30; and if the offload card response message needs to be forwarded to the management node 30, updates the offload card response message, and sends the updated offload card response message to the management node 30.

Specifically, the offload card response message may further include a second data flow feature. After receiving the offload card response message, the virtual switch 201 matches the second data flow feature in the offload card response message with the preset data flow features, to determine whether the second data flow feature is the data flow feature of the offload card 20, thereby determining whether the offload card response message is the response information sent by the offload card 20. When the second data flow feature is the data flow feature of the offload card 20, it indicates that the offload card response message is the response information sent by the offload card 20, in other words, the offload card response message is sent by the offload card 20 to the management node 30. Therefore, the virtual switch 201 updates the destination MAC address in the offload card response message to the MAC address of the management node 30, to send the offload card response message to the management node 30.

In this embodiment of the present invention, in the response information received by the virtual switch 201, if the source IP address is 192.168.1.110, the source MAC address is MAC2, the destination IP address is 192.168.1.100, the destination MAC address is MAC0, and the port number is 6680, in the updated offload card response message, the source IP address is 192.168.1.110, the source MAC address is MAC1, the destination IP address is 192.168.1.100, the destination MAC address is MAC0, and the port number is 6680.

It should be noted that, when the server 10 needs to return server response message after processing the management request sent by the management node 30, the server 10 may send the server response message to the virtual switch 201, to send the server response message to the management node 30 by using the virtual switch 201.

In this embodiment of the present invention, the virtual switch 201 receives the offload card response message, after determining that the offload card response message is the response information sent by the offload card 20, updates the offload card response message, and sends the updated offload card response message to the management node 30. Therefore, the offload card response message may be sent to the management node 30 without occupying bandwidth of the PCIE channel between the server 10 and the offload card 20, thereby improving the efficiency of transmitting the data of the I/O service on the PCIE channel, and further improving the processing efficiency of the I/O service. In addition, a management agent does not need to be set in the server 10, so that resource occupation of a CPU of the server 10 is reduced, and running efficiency of the CPU of the server 10 is improved.

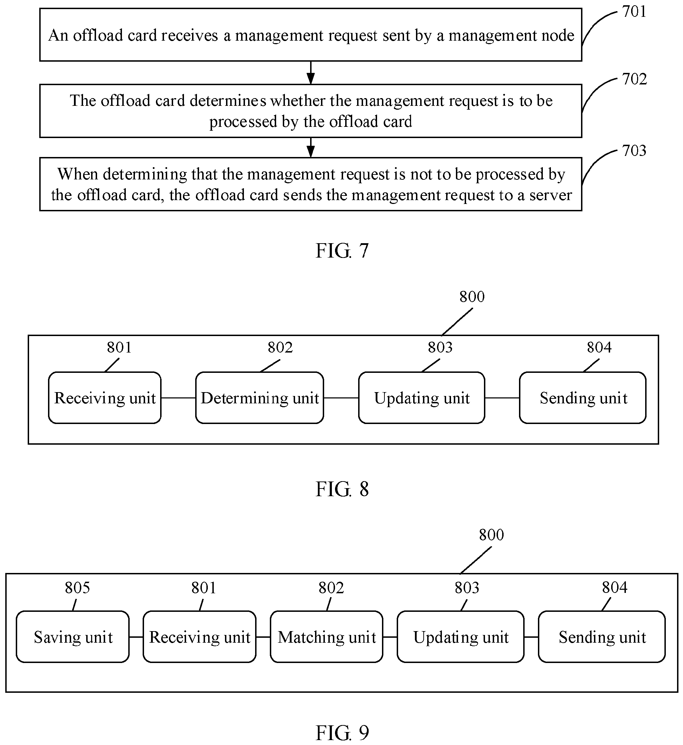

Still another embodiment of the present invention provides a data transmission method, applied to the offload card 20 in the network architecture shown in FIG. 2. Specifically, the method may be applied to the virtual switch 202 included in the offload card 20. As shown in FIG. 7, the method includes the following steps.

701. The offload card 20 receives a management request sent by a management node 30.

A destination MAC address in the management request is a MAC address of a server 10, and a source MAC address in the management request is a MAC address of the management node 30.

702. The offload card 20 determines whether the management request is to be processed by the offload card.

The management request sent by the management node 30 includes a management request to be processed by the offload card 20 or a management request to be processed by the server 10. Therefore, after receiving the management request, the virtual switch 201 needs to determine whether the management request is to be processed by the offload card 20.

The management request may further include a first data flow feature. In this case, the offload card 20 may determine, based on preset data flow features, whether the first data flow feature is a data flow feature of the offload card 20, and determine whether the management request is to be processed by the offload card 20. When determining that the first data flow feature is the data flow feature of the offload card 20, the offload card 20 determines that the management request is to be processed by the offload card 20. When determining that the first data flow feature is not the data flow feature of the offload card 20, the offload card 20 determines that the management request is to be processed by the server 10.

The preset data flow features include the data flow feature of the offload card 20, and may further include a data flow feature of the server 10. Whether the management request is to be processed by the offload card 20 may be determined by determining, based on the preset data flow features, whether the first data flow feature is the data flow feature of the offload card 20, that is, whether the management request is to be sent to the offload card 20 for processing. Further, the management request may be sent to the offload card 20 when determining that the management request is to be sent to the offload card 20 for processing.

In an optional example of this embodiment of the present invention, the offload card 20 may receive in advance the data flow feature of the offload card 20 sent by the offload card 20, and save the data flow feature of the offload card 20 as one of the preset data flow features.

In this embodiment of the present invention, the data flow feature of the offload card 20 indicates that the management request is to be processed by the offload card 20, and may indicate that the management request is to be processed by the offload card 20. Specifically, the data flow feature of the offload card 20 may include a port number of the offload card and/or an identifier of an offload card management service, and the like.

703. When the offload card 20 determining that the management request is not to be processed by the offload card 20, the offload card 20 sends the management request to the server.

The destination MAC address in the updated management request is a MAC address of the offload card 20.

After the virtual switch 201 matches the first data flow feature in the management request with a preset data flow table, if the first data flow feature is the data flow feature of the offload card 20, it indicates that the management request needs to be processed by the offload card 20, so that the offload card 20 sends the management request to the offload card 20 for processing after updating the destination MAC address in the management request to the MAC address of the offload card 20; and if the first data flow feature is not the data flow feature of the offload card 20, it indicates that the management request needs to be processed by the server 10, so that the offload card 20 sends the management request to the server 10 for processing.

In this embodiment of the present invention, after receiving the management request sent by the management node 30, the offload card 20 determines whether the management request needs to be processed by the offload card 20. If the management request is not a management request that needs to be processed by the offload card 20, the management request is sent to the server 10 for processing. In this way, a management request that needs to be processed by the server 10 is determined by the offload card 20 and is sent to the server 10. A resource of a CPU of the server 10 is not occupied, thereby improving running efficiency of the CPU of the server 10.

In an implementation of this embodiment of the present invention, the following process is further included: The offload card 20 receives a server response message sent by the server 10; the offload card 20 determines whether the server response message is information sent by the server 10 in response to the management request; and when the server response message is the information sent by the server 10 in response to the management request, the offload card 20 sends the server response message to the management node 30.

After receiving the server response message, the offload card 20 may determine whether the server response message is the information sent by the server 10 in response to the management request, in other words, whether the server response message needs to be sent to the management node 30; and if the server response message needs to be forwarded to the management node 30, sends the server response message to the management node 30.

Specifically, the server response message may further include a second data flow feature.

After receiving the server response message returned by the server 10, the offload card 20 matches the second data flow feature in the server response message with the preset data flow features, to determine whether the second data flow feature is the data flow feature of the offload card 20, thereby determining whether the server response message is the response information sent by the offload card 20. When the second data flow feature is not the data flow feature of the offload card 20, it indicates that the server response message is not the response information sent by the offload card 20, in other words, the server response message is information sent by the server 10 in response to the management request. Therefore, the offload card 20 sends the server response message to the management node 30.

In this embodiment of the present invention, after receiving the server response message and determining that the server response message is the information sent by the server 10 in response to the management request, the offload card 20 sends the server response message to the management node 30. Therefore, the resource of the CPU of the server 10 is not occupied, and the running efficiency of the CPU of the server 10 is improved.

Compared with the embodiment shown in FIG. 5, in the embodiments shown in FIG. 6 and FIG. 7, the offload card 20 is used to: determine whether the data flow feature in the management request is the data flow feature of the offload card 20, update the management request when the data flow feature in the management request is the data flow feature of the offload card 20, and send the management request to the server 10 for processing when the data flow feature in the management request is not the data flow feature of the offload card 20. In this case, a function of the server 10 is offloaded to the offload card 20 for implementation. This can improve the running efficiency of the CPU of the server 10, and further improve service processing efficiency of the server 10.

It should be noted that, in the foregoing embodiments of the present invention, a manner of data interaction between the server 10, the offload card 20, and the management node 30 directs at a management data flow, and a service data flow between the server 10 and the offload card 20 may further be transmitted through the PCIE channel between the server 10 and the offload card 20.

FIG. 8 is a schematic block diagram of a server 800 according to an embodiment of the present invention. The server 800 may be specifically a server 10, configured to perform the method in the embodiment shown in FIG. 5. As shown in FIG. 8, the server 800 includes a receiving unit 801, a determining unit 802, an updating unit 803, and a sending unit 804. The determining unit 802 is connected to the receiving unit 801 and the updating unit 803, and the sending unit 804 is connected to the updating unit 803.

In this embodiment of the present invention, the receiving unit 801 is configured to receive a management request sent by a communications device, where the management request is sent by a management node to the communications device, the management request includes a first destination media access control MAC address and a first source MAC address, the first destination MAC address is a MAC address of the server, and the first source MAC address is a MAC address of the management node. For specific implementation details of receiving, by the receiving unit 801, the management request sent by the communications device, refer to specific details of step 501 shown in FIG. 5, and details are not described herein again.

The determining unit 802 is configured to determine whether the management request is to be processed by an offload card. Specifically, the determining unit 802 is further configured to: when determining that the first data flow feature is a data flow feature of the offload card, determine that the management request is to be processed by the offload card. For specific implementation details of determining, by the determining unit 802, whether the management request is to be processed by the offload card, refer to specific details of step 502 shown in FIG. 5, and details are not described herein again.

The updating unit 803 is further configured to: when the determining unit 802 determines that the management request is to be processed by the offload card, update the management request and obtain an updated management request, where the first destination MAC address in the updated management request is a MAC address of the offload card, and the first source MAC address in the updated management request is the MAC address of the server. For specific implementation details of the updating unit 803, refer to specific details of step 503 shown in FIG. 5, and details are not described herein again.

The sending unit 804 is configured to send the updated management request to the communications device. For specific implementation details of the sending unit 804, refer to specific details of step 504 shown in FIG. 5, and details are not described herein again.

In this embodiment of the present invention, the server 800 sends the updated management request by using the communications device, and does not need to occupy bandwidth of a PCIE channel between the server 800 and the offload card, thereby improving efficiency of transmitting data of an I/O service on the PCIE channel, and further improving processing efficiency of the I/O service. In addition, a management agent does not need to be set in the server 800, so that resource occupation of a CPU of the server 800 is reduced, and running efficiency of the CPU of the server 800 is improved.

In an optional implementation, the receiving unit 801 is further configured to receive an offload card response message sent by the communications device, where the offload card response message includes a second destination MAC address and a second source MAC address, the second destination MAC address is the MAC address of the server, and the second source MAC address is the MAC address of the offload card.

Specifically, the offload card response message further includes a second data flow feature.

The determining unit 802 is further configured to determine whether the offload card response message is response information sent by the offload card.

Specifically, the determining unit 802 is further configured to: when determining that the second data flow feature is the data flow feature of the offload card, determine that the offload card response message is the response information sent by the offload card.

The updating unit 803 is further configured to: when the offload card response message is the response information sent by the offload card, update the offload card response message and obtain an updated offload card response message, where the second destination MAC address in the updated offload card response message is the MAC address of the management node, and the second source MAC address in the updated offload card response message is the MAC address of the server.

The sending unit 804 is further configured to send the updated offload card response message to the communications device.

It should be noted that, in this optional implementation, for specific details of functional implementation of the receiving unit 801, the determining unit 802, the updating unit 803, and the sending unit 804, refer to related specific details in the embodiment shown in FIG. 5, and details are not described herein again.

In an optional implementation, the data flow feature of the offload card indicates that the management request is to be processed by the offload card, and the data flow feature of the offload card includes a port number of the offload card and/or an identifier of an offloading management service.

Optionally, the modules and the components in this embodiment of the present invention may be integrated together, or may be separately disposed.

FIG. 9 is a schematic block diagram of a server 800 according to another embodiment of the present invention. The server 800 may be specifically a server 10, configured to perform the method in the embodiment shown in FIG. 5. As shown in FIG. 9, based on the server 800 shown in FIG. 8, the server 800 further includes a saving unit 805, where the saving unit 805 is connected to the receiving unit 801.

In this embodiment of the present invention, the receiving unit 801 is further configured to receive a data flow feature message sent by the communications device, where the data flow feature message includes a data flow feature of the offload card.

The saving unit 805 is configured to save the data flow feature of the offload card.

Optionally, the modules and the components in this embodiment of the present invention may be integrated together, or may be separately disposed.

It should be noted that, in this optional implementation, for specific details of functional implementation of the receiving unit 801 and the saving unit 805, refer to related specific details in the embodiment shown in FIG. 5, and details are not described herein again.

The server 800 according to this embodiment of the present invention may correspond to an execution body in the data transmission method according to this embodiment of the present invention, and the foregoing and other operations and/or functions of the modules in the server 800 are used to implement corresponding procedures of the method in FIG. 5. For brevity, details are not described herein again.

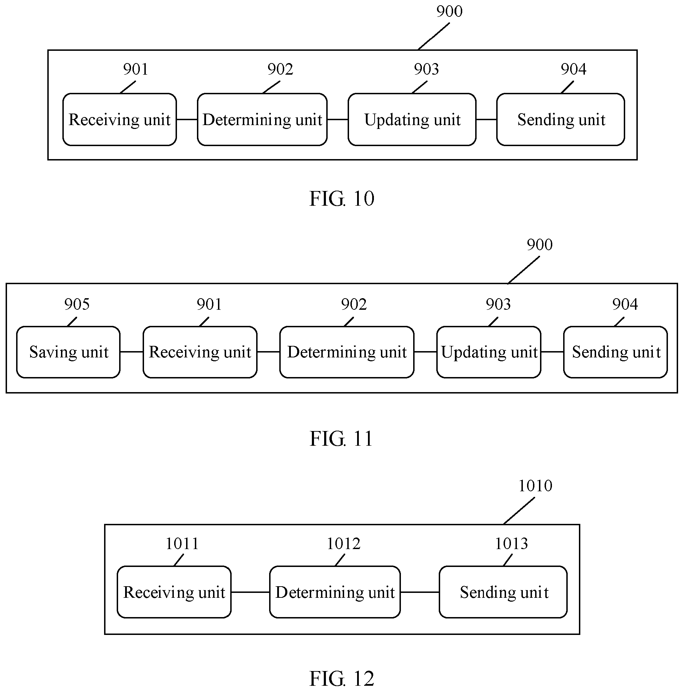

FIG. 10 is a schematic block diagram of an offload card 900 according to an embodiment of the present invention. The offload card 900 includes a virtual switch. The virtual switch may be specifically a virtual switch 201, configured to perform the method in the embodiment shown in FIG. 6. As shown in FIG. 10, the offload card 900 includes a receiving unit 901, a determining unit 902, an updating unit 903, and a sending unit 904. The determining unit 902 is connected to the receiving unit 901 and the updating unit 903, and the sending unit 904 is connected to the updating unit 903.

In this embodiment of the present invention, the receiving unit 901 is configured to receive a management request sent by a management node, where the management request includes a destination media access control MAC address, and the destination MAC address is a MAC address of a server. For specific implementation details of receiving, by the receiving unit 901, the management request, refer to specific details of step 601 shown in FIG. 6, and details are not described herein again.

The determining unit 902 is configured to determine whether the management request is to be processed by the offload card. Specifically, the management request may further include a first data flow feature. The determining unit 902 is further configured to: when determining that the first data flow feature is a data flow feature of the offload card, determine that the management request is to be processed by the offload card. For specific implementation details of determining, by the determining unit 902, whether the management request is to be processed by the offload card, refer to specific details of step 602 shown in FIG. 6, and details are not described herein again.

The updating unit 903 is configured to: when the determining unit 902 determines that the management request is to be processed by the offload card, update the management request and obtain an updated management request, where the destination MAC address in the updated management request is a MAC address of the offload card. For specific implementation details of the updating unit 903, refer to specific details of step 603 shown in FIG. 6, and details are not described herein again.

The sending unit 904 is configured to send the updated management request to the processor. For specific implementation details of the sending unit 904, refer to specific details of step 604 shown in FIG. 6, and details are not described herein again.

In this embodiment of the present invention, the virtual switch receives the management request sent by the management node 30, and sends the updated management request to the offload card 20 for processing when determining that the management request needs to be processed by the offload card 20, thereby preventing the management request from being transmitted through a PCIE channel between the server 10 and the offload card 20, improving efficiency of transmitting data of an I/O service on the PCIE channel, and further improving processing efficiency of the I/O service. In addition, a management agent does not need to be set in the server 10, so that resource occupation of a CPU of the server 10 is reduced, and running efficiency of the CPU of the server 10 is improved.

In an optional implementation, the receiving unit 901 is further configured to receive an offload card response message, where the offload card response message includes a source MAC address, and the source MAC address is the MAC address of the offload card.

Specifically, the offload card response message further includes a second data flow feature.

The determining unit 902 is further configured to determine whether the offload card response message is response information sent by the offload card.

Specifically, the determining unit 902 is further configured to: when determining that the second data flow feature is the data flow feature of the offload card, determine that the offload card response message is the response information sent by the offload card.

The updating unit 903 is further configured to: when the offload card response message is the response information sent by the offload card, update the offload card response message and obtain an updated offload card response message, where the source MAC address in the updated offload card response message is the MAC address of the server.

The sending unit 904 is further configured to send the updated offload card response message to the management node.

It should be noted that, in this optional implementation, for specific details of functional implementation of the receiving unit 901, the determining unit 902, the updating unit 903, and the sending unit 904, refer to related specific details in the embodiment shown in FIG. 6, and details are not described herein again.

In an optional implementation, the data flow feature of the offload card indicates that the management request is to be processed by the offload card, and the data flow feature of the offload card includes a port number of the offload card and/or an identifier of an offloading management service.

Optionally, the modules and the components in this embodiment of the present invention may be integrated together, or may be separately disposed.

FIG. 11 is a schematic block diagram of an offload card 900 according to another embodiment of the present invention. As shown in FIG. 11, based on the offload card 900 shown in FIG. 10, the offload card 900 further includes a saving unit 905, where the saving unit 905 is connected to the receiving unit 901.

In this embodiment of the present invention, the receiving unit 901 is further configured to receive a data flow feature message sent by a communications device, where the data flow feature message includes a data flow feature of the offload card.

The saving unit 905 is configured to save the data flow feature of the offload card.

It should be noted that, in this optional implementation, for specific details of functional implementation of the receiving unit 901 and the saving unit 905, refer to related specific details in the embodiment shown in FIG. 6, and details are not described herein again.

Optionally, the modules and the components in this embodiment of the present invention may be integrated together, or may be separately disposed.

The offload card 900 according to this embodiment of the present invention may correspond to an execution body in the data transmission method according to this embodiment of the present invention, and the foregoing and other operations and/or functions of the modules in the offload card 900 are used to implement corresponding procedures of the method in FIG. 6. For brevity, details are not described herein again.

FIG. 12 is a schematic block diagram of an offload card 1010 according to still another embodiment of the present invention. The offload card 1010 may be specifically an offload card 20, configured to perform the method in the embodiment shown in FIG. 7. As shown in FIG. 12, the offload card 1010 includes a receiving unit 1011, a determining unit 1012, and a sending unit 1013. The determining unit 1012 is connected to the receiving unit 1011 and the sending unit 1013.

In this embodiment of the present invention, the receiving unit 1011 is configured to receive a management request sent by a management node. The determining unit 1012 is configured to determine whether the management request is to be processed by the offload card. The sending unit 1013 is configured to send the management request to the server when the determining unit 1012 determines that the management request is not to be processed by the offload card.

Specifically, the management request further includes a first data flow feature. The determining unit 1012 is further configured to: when the first data flow feature is not a data flow feature of the offload card, determine that the management request is not to be processed by the offload card.

It should be noted that, in this embodiment of the present invention, for specific details of functional implementation of the receiving unit 1011, refer to specific details of step 701 shown in FIG. 7; for specific details of functional implementation of the determining unit 1012, refer to specific details of step 702 shown in FIG. 7; and for specific details of functional implementation of the sending unit 1013, refer to specific details of step 703 shown in FIG. 7. Details are not described herein again.

In an optional implementation, the receiving unit 1011 is further configured to receive a server response message sent by the server. The determining unit 1012 is further configured to determine whether the server response message is information sent by the server in response to the management request. The sending unit 1013 is further configured to send the server response message to the management node when the response message is the information sent by the server in response to the management request.

Specifically, the server response message further includes a second data flow feature. The determining unit 1012 is further configured to: when the second data flow feature is not the data flow feature of the offload card, determine that the server response message is the information sent by the server in response to the management request.

It should be noted that, in this optional implementation, for specific details of functional implementation of the receiving unit 1011, the determining unit 1012, and the sending unit 1013, refer to related specific details in the embodiment shown in FIG. 7, and details are not described herein again.

In an optional implementation, the data flow feature of the offload card indicates that the management request is to be processed by the offload card, and the data flow feature of the offload card includes a port number of the offload card and/or an identifier of an offloading management service.

Optionally, the modules and the components in this embodiment of the present invention may be integrated together, or may be separately disposed.

The offload card 1010 according to this embodiment of the present invention may correspond to an execution body in the data transmission method according to this embodiment of the present invention, and the operations and/or functions of the modules in the offload card 1010 are used to implement corresponding procedures of the method in FIG. 7. For brevity, details are not described herein again.

An embodiment of the present invention provides a data transmission system. The system may include a server 800 and an offload card 20, and the system is applied to the network architecture shown in FIG. 1.

An embodiment of the present invention provides another data transmission system. The system may include a server 10 and an offload card 900, and the system is applied to the network architecture shown in FIG. 2.

An embodiment of the present invention provides still another data transmission system. The system may include a server 10 and an offload card 1010, and the system is applied to the network architecture shown in FIG. 2.

All or some of the foregoing embodiments may be implemented by using software, hardware, firmware, or any combination thereof. When the software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drivie, SSD)), or the like.

## Claims

1. A data transmission method, applied to an offload card (20), wherein the offload card (20) comprises a virtual switch (201) and a processor (202), the method is performed by the virtual switch (201), and the method comprises:
receiving, by the virtual switch (201), a management request sent by a management node (30), wherein the management request comprises a destination media access control, MAC, address, and the destination MAC address is a MAC address of a server (10);
determining, by the virtual switch (201), whether the management request is to be processed by the offload card (20);
**characterized in that**
when the virtual switch (201) determines that the management request is to be processed by the offload card (20), updating, by the virtual switch (201), the management request, and obtaining an updated management request, wherein the destination MAC address in the updated management request is a MAC address of the offload card (20); and
sending, by the virtual switch (201), the updated management request to the processor (202).

2. The method according to claim 1, wherein the management request further comprises a first data flow feature; and
the determining, by the virtual switch (201), whether the management request is to be processed by the offload card (20) comprises:
when the virtual switch (201) determines that the first data flow feature is a data flow feature of the offload card (20), determining that the management request is to be processed by the offload card (20).

3. The method according to claim 1 or 2, further comprising:
receiving, by the virtual switch (201), an offload card (20) response message, wherein the offload card (20) response message comprises a source MAC address, and the source MAC address is the MAC address of the offload card (20);
determining, by the virtual switch (201), whether the offload card (20) response message is response information sent by the offload card (20);
when the offload card (20) response message is the response information sent by the offload card (20), updating, by the virtual switch (201), the offload card (20) response message, and obtaining an updated offload card (20) response message, wherein the source MAC address in the updated offload card (20) response message is the MAC address of the server (10); and
sending, by the virtual switch (201), the updated offload card (20) response message to the management node (30).

4. The method according to claim 3, wherein the offload card (20) response message further comprises a second data flow feature; and
the determining, by the virtual switch (201), whether the offload card (20) response message is response information sent by the offload card (20) comprises:
when the virtual switch (201) determines that the second data flow feature is the data flow feature of the offload card (20), determining that the offload card (20) response message is the response information sent by the offload card (20).

5. The method according to claim 2 or 4, wherein before the determining, by the virtual switch (201), whether the management request is to be processed by the offload card (20), the method further comprises:
receiving, by the virtual switch (201), a data flow feature message sent by the processor (202), wherein the data flow feature message comprises the data flow feature of the offload card (20); and
saving, by the virtual switch (201), the data flow feature of the offload card (20).

6. The method according to claim 2, 4, or 5, wherein the data flow feature of the offload card (20) indicates that the management request is to be processed by the offload card (20), and the data flow feature of the offload card (20) comprises a port number of the offload card (20) and/or an identifier of an offloading management service.

7. An offload card (20), wherein the offload card (20) comprises a virtual switch (201) and a processor (202), and the virtual switch (201) comprises:
a receiving unit, configured to receive a management request sent by a management node (30), wherein the management request comprises a destination media access control, MAC, address, and the destination MAC address is a MAC address of a server (10);
a determining unit, configured to determine whether the management request is to be processed by the offload card (20);
**characterized by**
an updating unit, configured to: when the updating unit determines that the management request is to be processed by the offload card (20), update the management request and obtain an updated management request, wherein the destination MAC address in the updated management request is a MAC address of the offload card (20); and
a sending unit, configured to send the updated management request to the processor (202).

8. The offload card (20) according to claim 7, wherein the management request further comprises a first data flow feature; and
the determining unit is further configured to: when determining that the first data flow feature is a data flow feature of the offload card (20), determine that the management request is to be processed by the offload card (20).

9. The offload card (20) according to claim 7 or 8, wherein the receiving unit is further configured to receive an offload card (20) response message, wherein the offload card (20) response message comprises a source MAC address, and the source MAC address is the MAC address of the offload card (20);
the determining unit is further configured to determine whether the offload card (20) response message is response information sent by the offload card (20);
the updating unit is further configured to: when the offload card (20) response message is the response information sent by the offload card (20), update the offload card (20) response message and obtain an updated offload card (20) response message, wherein the source MAC address in the updated offload card (20) is the MAC address of the server (10); and
the sending unit is further configured to send the updated offload card (20) response message to the management node (30).

10. The offload card (20) according to claim 9, wherein the offload card (20) response message further comprises a second data flow feature; and
the determining unit is further configured to: when determining that the second data flow feature is the data flow feature of the offload card (20), determine that the offload card (20) response message is the response information sent by the offload card (20).

11. The offload card (20) according to claim 8 or 9, wherein the receiving unit is further configured to receive a data flow feature message sent by the processor (202), wherein the data flow feature message comprises the data flow feature of the offload card (20); and
the virtual switch (201) further comprises:
a saving unit, configured to save the data flow feature of the offload card (20).

12. The offload card (20) according to any one of claims 8-10, wherein the data flow feature of the offload card (20) indicates that the management request is to be processed by the offload card (20), and the data flow feature of the offload card (20) comprises a port number of the offload card (20) and/or an identifier of an offloading management service.

13. An offload card (20), comprising a processor (211) and a memory (212), wherein the memory (212) is configured to store computer program code, wherein the computer program code comprises an instruction, and when the processor (211) execute the instruction, the offload card (20) is configured to perform the data transmission method according to any one of claims 1to 6.

14. A server (10), comprising an offload card (20), wherein the offload card (20) is configured to:
receive a management request sent by a management node (30), wherein the management request comprises a destination media access control, MAC, address, and the destination MAC address is a MAC address of a server (10);
determine whether the management request is to be processed by the offload card (20);
when the virtual switch (201) determines that the management request is to be processed by the offload card (20), update the management request, and obtaining an updated management request, wherein the destination MAC address in the updated management request is a MAC address of the offload card (20); and
send the updated management request to the processor (211).

15. The server (10) of claim 14, wherein the offload card (20) is configured to:
when the virtual switch (201) determines that the first data flow feature is a data flow feature of the offload card (20), determine that the management request is to be processed by the offload card (20).

## Patentansprüche

1. Datenübertragungsverfahren, das an einer Auslagerungskarte (20) angewandt wird, wobei die Auslagerungskarte (20) einen virtuellen Switch (201) und einen Prozessor (202) umfasst und das Verfahren durch den virtuellen Switch (201) durchgeführt wird, wobei das Verfahren Folgendes umfasst:
Empfangen einer von einem Verwaltungsknoten (30) gesendeten Verwaltungsanforderung durch den virtuellen Switch (201), wobei die Verwaltungsanforderung eine Zielmedienzugriffssteuerungsadresse (Ziel-MAC-Adresse) umfasst und die Ziel-MAC-Adresse eine MAC-Adresse eines Servers (10) ist;
Bestimmen durch den virtuellen Switch (201), ob die Verwaltungsanforderung von der Auslagerungskarte (20) verarbeitet werden soll;
und das durch Folgendes gekennzeichnet ist:
Aktualisieren der Verwaltungsanforderung durch den virtuellen Switch (201) und Erhalten einer aktualisierten Verwaltungsanforderung, wenn der virtuelle Switch (201) bestimmt,
dass die Verwaltungsanforderung von der Auslagerungskarte (20) verarbeitet werden soll, wobei die Ziel-MAC-Adresse in der aktualisierten Verwaltungsanforderung eine MAC-Adresse der Auslagerungskarte (20) ist; und
Senden der aktualisierten Verwaltungsanforderung an den Prozessor (202) durch den virtuelle Switch (201).

2. Verfahren nach Anspruch 1, wobei die Verwaltungsanforderung ferner ein erstes Datenflussmerkmal umfasst; und
wobei das Bestimmen durch den virtuellen Switch (201), ob die Verwaltungsanforderung von der Auslagerungskarte (20) verarbeitet werden soll, Folgendes umfasst:
Bestimmen, dass die Verwaltungsanforderung von der Auslagerungskarte (20) verarbeitet werden soll, wenn der virtuelle Switch (201) bestimmt, dass das erste Datenflussmerkmal ein Datenflussmerkmal der Auslagerungskarte (20) ist.

3. Verfahren nach Anspruch 1 oder 2, das ferner Folgendes umfasst:
Empfangen einer Antwortnachricht für Auslagerungskarten (20) durch den virtuellen Switch (201), wobei die Antwortnachricht für Auslagerungskarten (20) eine Quellen-MAC-Adresse umfasst und die Quellen-MAC-Adresse die MAC-Adresse der Auslagerungskarte (20) ist;
Bestimmen durch den virtuellen Switch (201), ob die Antwortnachricht für Auslagerungskarten (20) eine von der Auslagerungskarte (20) gesendete Antwortinformation ist;
Aktualisieren der Antwortnachricht für Auslagerungskarten (20) durch den virtuellen Switch (201) und Erhalten einer aktualisierten Antwortnachricht für Auslagerungskarten (20), wenn die Antwortnachricht für Auslagerungskarten (20) die von der Auslagerungskarte (20) gesendete Antwortinformation ist, wobei die Quellen-MAC-Adresse in der aktualisierten Antwortnachricht für Auslagerungskarten (20) die MAC-Adresse des Servers (10) ist; und
Senden der aktualisierten Antwortnachricht für Auslagerungskarten (20) an den Verwaltungsknoten (30) durch den virtuellen Switch (201) .

4. Verfahren nach Anspruch 3, wobei die Antwortnachricht für Auslagerungskarten (20) ferner ein zweites Datenflussmerkmal umfasst; und
wobei das Bestimmen durch den virtuellen Switch (201), ob die Antwortnachricht für Auslagerungskarten (20) eine von der Auslagerungskarte (20) gesendete Antwortinformation ist, Folgendes umfasst:
Bestimmen, dass die Antwortnachricht für Auslagerungskarten (20) die von der Auslagerungskarte (20) gesendete Antwortinformation ist, wenn der virtuelle Switch (201) bestimmt, dass das zweite Datenflussmerkmal das Datenflussmerkmal der Auslagerungskarte (20) ist.

5. Verfahren nach Anspruch 2 oder 4, wobei das Verfahren vor dem Bestimmen durch den virtuellen Switch (201), ob die Verwaltungsanforderung von der Auslagerungskarte (20) verarbeitet werden soll, Folgendes umfasst:
Empfangen einer vom Prozessor (202) gesendeten Datenflussmerkmalsnachricht durch den virtuellen Switch (201),
wobei die Datenflussmerkmalsnachricht das Datenflussmerkmal der Auslagerungskarte (20) umfasst; und
Speichern des Datenflussmerkmals der Auslagerungskarte (20) durch den virtuellen Switch (201).

6. Verfahren nach Anspruch 2, 4 oder 5, wobei das Datenflussmerkmal der Auslagerungskarte (20) angibt, dass die Verwaltungsanforderung von der Auslagerungskarte (20) verarbeitet werden soll, und das Datenflussmerkmal der Auslagerungskarte (20) eine Portnummer der Auslagerungskarte (20) und/oder eine Kennung eines Auslagerungs-Verwaltungsdienstes umfasst.

7. Auslagerungskarte (20), wobei die Auslagerungskarte (20) einen virtuellen Switch (201) und einen Prozessor (202) umfasst und wobei der virtuelle Switch (201) Folgendes umfasst:
eine Empfangseinheit, die dazu konfiguriert ist, eine von einem Verwaltungsknoten (30) gesendete Verwaltungsanforderung zu empfangen, wobei die Verwaltungsanforderung eine Zielmedienzugriffssteuerungsadresse (Ziel-MAC-Adresse) umfasst und die Ziel-MAC-Adresse eine MAC-Adresse eines Servers (10) ist;
eine Bestimmungseinheit, die dazu konfiguriert ist, zu bestimmen, ob die Verwaltungsanforderung von der Auslagerungskarte (20) verarbeitet werden soll;
**gekennzeichnet durch**
eine Aktualisierungseinheit, die zu Folgendem konfiguriert ist:
Aktualisieren der Verwaltungsanforderung und Erhalten einer aktualisierten Verwaltungsanforderung, wenn die Aktualisierungseinheit bestimmt, dass die Verwaltungsanforderung von der Auslagerungskarte (20) verarbeitet werden soll, wobei die Ziel-MAC-Adresse in der aktualisierten Verwaltungsanforderung eine MAC-Adresse der Auslagerungskarte (20) ist; und
eine Sendeeinheit, die dazu konfiguriert ist, die aktualisierte Verwaltungsanforderung an den Prozessor (202) zu senden.

8. Auslagerungskarte (20) nach Anspruch 7, wobei die Verwaltungsanforderung ferner ein erstes Datenflussmerkmal umfasst; und
wobei die Bestimmungseinheit ferner zu Folgendem konfiguriert ist:
Bestimmen, dass die Verwaltungsanforderung von der Auslagerungskarte (20) verarbeitet werden soll, wenn bestimmt wird, dass das erste Datenflussmerkmal ein Datenflussmerkmal der Auslagerungskarte (20) ist.

9. Auslagerungskarte (20) nach Anspruch 7 oder 8, wobei die Bestimmungseinheit ferner dazu konfiguriert ist, eine Antwortnachricht für Auslagerungskarten (20) zu empfangen, wobei die Antwortnachricht für Auslagerungskarten (20) eine Quellen-MAC-Adresse umfasst und die Quellen-MAC-Adresse die MAC-Adresse der Auslagerungskarte (20) ist;
wobei die Bestimmungseinheit ferner dazu konfiguriert, zu bestimmen, ob die Antwortnachricht für Auslagerungskarten (20) eine von der Auslagerungskarte (20) gesendete Antwortinformation ist;
wobei die Aktualisierungseinheit ferner zu Folgendem konfiguriert ist: Aktualisieren der Antwortnachricht für Auslagerungskarten (20) und Erhalten einer aktualisierten Antwortnachricht für Auslagerungskarten (20), wenn die Antwortnachricht für Auslagerungskarten (20) die von der Auslagerungskarte (20) gesendete Antwortinformation ist, wobei die Quellen-MAC-Adresse in der aktualisierten Auslagerungskarte (20) die MAC-Adresse des Servers (10) ist;
wobei die Sendeeinheit ferner dazu konfiguriert ist, die aktualisierte Antwortnachricht für Auslagerungskarten (20) an den Verwaltungsknoten (30) zu senden.

10. Auslagerungskarte (20) nach Anspruch 9, wobei die Antwortnachricht für Auslagerungskarten (20) ferner ein zweites Datenflussmerkmal umfasst; und
wobei die Bestimmungseinheit ferner zu Folgendem konfiguriert ist:
Bestimmen, dass die Antwortnachricht für Auslagerungskarten (20) die von der Auslagerungskarte (20) gesendete Antwortinformation ist, wenn bestimmt wird, dass das zweite Datenflussmerkmal das Datenflussmerkmal der Auslagerungskarte (20) ist.

11. Auslagerungskarte (20) nach Anspruch 8 oder 9, wobei die Empfangseinheit ferner dazu konfiguriert ist, eine vom Prozessor (202) gesendete Datenflussmerkmalsnachricht zu empfangen, wobei die Datenflussmerkmalsnachricht das Datenflussmerkmal der Auslagerungskarte (20) umfasst; und
wobei der virtuelle Switch (201) ferner Folgendes umfasst:
eine Speichereinheit, die dazu konfiguriert ist, das Datenflussmerkmal der Auslagerungskarte (20) zu speichern.

12. Auslagerungskarte (20) nach einem der Ansprüche 8-10, wobei das Datenflussmerkmal der Auslagerungskarte (20) angibt, dass die Verwaltungsanforderung von der Auslagerungskarte (20) verarbeitet werden soll, und das Datenflussmerkmal der Auslagerungskarte (20) eine Portnummer der Auslagerungskarte (20) und/oder eine Kennung eines Auslagerungs-Verwaltungsdienstes umfasst.

13. Auslagerungskarte (20), die einen Prozessor (211) und einen Speicher (212) umfasst, wobei der Speicher (212) dazu konfiguriert ist, Computerprogrammcode zu speichern und wobei der Computerprogrammcode eine Anweisung umfasst, und, wenn der Prozessor (211) die Anweisung ausführt, die Auslagerungskarte (20) dazu konfiguriert wird, das Datenübertragungsverfahren nach einem der Ansprüche 1 bis 6 durchzuführen.

14. Server (10), der eine Auslagerungskarte (20) umfasst, wobei die Auslagerungskarte (20) zu Folgendem konfiguriert ist:
Empfangen einer von einem Verwaltungsknoten (30) gesendeten Verwaltungsanforderung, wobei die Verwaltungsanforderung eine Zielmedienzugriffssteuerungsadresse (Ziel-MAC-Adresse) umfasst und die Ziel-MAC-Adresse eine MAC-Adresse eines Servers (10) ist;
Bestimmen, ob die Verwaltungsanforderung von der Auslagerungskarte (20) verarbeitet werden soll;
Aktualisieren der Verwaltungsanforderung und Erhalten einer aktualisierten Verwaltungsanforderung, wenn der virtuelle Switch (201) bestimmt, dass die Verwaltungsanforderung von der Auslagerungskarte (20) verarbeitet werden soll, wobei die Ziel-MAC-Adresse in der aktualisierten Verwaltungsanforderung eine MAC-Adresse der Auslagerungskarte (20) ist; und
Senden der aktualisierten Verwaltungsanforderung an den Prozessor (211) .

15. Server (10) nach Anspruch 14, wobei die Auslagerungskarte (20) zu Folgendem konfiguriert ist:
Bestimmen, dass die Verwaltungsanforderung von der Auslagerungskarte (20) verarbeitet werden soll, wenn der virtuelle Switch (201) bestimmt, dass das erste Datenflussmerkmal ein Datenflussmerkmal der Auslagerungskarte (20) ist.

## Revendications

1. Procédé de transmission de données, appliqué à une carte de déchargement (20), dans lequel la carte de déchargement (20) comprend un commutateur virtuel (201) et un processeur (202), le procédé est exécuté par le commutateur virtuel (201), et le procédé comprend :
la réception, par le commutateur virtuel (201), d'une demande de gestion envoyée par un nœud de gestion (30), dans lequel la demande de gestion comprend une adresse de contrôle d'accès au support, MAC, de destination, et l'adresse MAC de destination est une adresse MAC d'un serveur (10) ;
le fait de déterminer, par le biais du commutateur virtuel (201), si la demande de gestion doit être traitée par la carte de déchargement (20) ;
**caractérisé en ce que**
lorsque le commutateur virtuel (201) détermine que la demande de gestion doit être traitée par la carte de déchargement (20), la mise à jour, par le commutateur virtuel (201), de la demande de gestion et l'obtention d'une demande de gestion mise à jour, dans lequel l'adresse MAC de destination dans la demande de gestion mise à jour est une adresse MAC de la carte de déchargement (20) ; et
l'envoi, par le commutateur virtuel (201), de la demande de gestion mise à jour au processeur (202).

2. Procédé selon la revendication 1, dans lequel la demande de gestion comprend en outre une première caractéristique de flux de données ; et
le fait de déterminer, par le biais du commutateur virtuel (201), si la demande de gestion doit être traitée par la carte de déchargement (20) comprend :
lorsque le commutateur virtuel (201) détermine que la première caractéristique de flux de données est une caractéristique de flux de données de la carte de déchargement (20), le fait de déterminer que la demande de gestion doit être traitée par la carte de déchargement (20).

3. Procédé selon la revendication 1 ou 2, comprenant en outre :
la réception, par le commutateur virtuel (201), d'un message de réponse de carte de déchargement (20), dans lequel le message de réponse de carte de déchargement (20) comprend une adresse MAC source, et l'adresse MAC source est l'adresse MAC de la carte de déchargement (20) ;
le fait de déterminer, par le biais du commutateur virtuel (201), si le message de réponse de carte de déchargement (20) est une information de réponse envoyée par la carte de déchargement (20) ;
lorsque le message de réponse de carte de déchargement (20) est l'information de réponse envoyée par la carte de déchargement (20), la mise à jour, par le commutateur virtuel (201), du message de réponse de carte de déchargement (20), et l'obtention d'un message de réponse de carte de déchargement (20) mise à jour, dans lequel l'adresse MAC source dans le message de réponse de carte de déchargement (20) mise à jour est l'adresse MAC du serveur (10) ; et
l'envoi, par le commutateur virtuel (201), du message de réponse de carte de déchargement (20) mis à jour au nœud de gestion (30) .

4. Procédé selon la revendication 3, dans lequel le message de réponse de carte de déchargement (20) comprend en outre une seconde caractéristique de flux de données ; et
le fait de déterminer, par le biais du commutateur virtuel (201), si le message de réponse de carte de déchargement (20) est une information de réponse envoyée par la carte de déchargement (20) comprend :
lorsque le commutateur virtuel (201) détermine que la seconde caractéristique de flux de données est la caractéristique de flux de données de la carte de déchargement (20), le fait de déterminer que le message de réponse de carte de déchargement (20) est l'information de réponse envoyée par la carte de déchargement (20).

5. Procédé selon la revendication 2 ou 4, dans lequel avant de déterminer, par le biais du commutateur virtuel (201), si la demande de gestion doit être traitée par la carte de déchargement (20), le procédé comprend en outre :
la réception, par le commutateur virtuel (201), d'un message de caractéristique de flux de données envoyé par le processeur (202), dans lequel le message de caractéristique de flux de données comprend la caractéristique de flux de données de la carte de déchargement (20) ; et
la sauvegarde, par le commutateur virtuel (201), de la caractéristique de flux de données de la carte de déchargement (20) .

6. Procédé selon la revendication 2, 4 ou 5, dans lequel la caractéristique de flux de données de la carte de déchargement (20) indique que la demande de gestion doit être traitée par la carte de déchargement (20), et la caractéristique de flux de données de la carte de déchargement (20) comprend un numéro de port de la carte de déchargement (20) et/ou un identifiant d'un service de gestion de déchargement.

7. Carte de déchargement (20), dans laquelle la carte de déchargement (20) comprend un commutateur virtuel (201) et un processeur (202), et le commutateur virtuel (201) comprend :
une unité de réception, configurée pour recevoir une demande de gestion envoyée par un nœud de gestion (30), dans lequel la demande de gestion comprend une adresse de contrôle d'accès au support, MAC, de destination, et l'adresse MAC de destination est une adresse MAC d'un serveur (10) ;
une unité de détermination, configurée pour déterminer si la demande de gestion doit être traitée par la carte de déchargement (20) ;
**caractérisé par**
une unité de mise à jour, configurée pour : lorsque l'unité de mise à jour détermine que la demande de gestion doit être traitée par la carte de déchargement (20), mettre à jour la demande de gestion et obtenir une demande de gestion mise à jour, dans laquelle l'adresse MAC de destination dans la demande de gestion mise à jour est une adresse MAC de la carte de déchargement (20) ; et
une unité d'envoi, configurée pour envoyer la demande de gestion mise à jour au processeur (202).

8. Carte de déchargement (20) selon la revendication 7, dans laquelle la demande de gestion comprend en outre une première caractéristique de flux de données ; et
l'unité de détermination est en outre configurée pour :
lorsqu'il est déterminé que la première caractéristique de flux de données est une caractéristique de flux de données de la carte de déchargement (20), déterminer que la demande de gestion doit être traitée par la carte de déchargement (20).

9. Carte de déchargement (20) selon la revendication 7 ou 8, dans laquelle l'unité de réception est en outre configurée pour recevoir un message de réponse de carte de déchargement (20), dans laquelle le message de réponse de carte de déchargement (20) comprend une adresse MAC source, et l'adresse MAC source est l'adresse MAC de la carte de déchargement (20) ;
l'unité de détermination est en outre configurée pour déterminer si le message de réponse de carte de déchargement (20) est une information de réponse envoyée par la carte de déchargement (20) ;
l'unité de mise à jour est en outre configurée pour : lorsque le message de réponse de carte de déchargement (20) est l'information de réponse envoyée par la carte de déchargement (20), mettre à jour le message de réponse de carte de déchargement (20) et obtenir un message de réponse de carte de déchargement (20) mis à jour, dans lequel l'adresse MAC source dans la carte de déchargement (20) mise à jour est l'adresse MAC du serveur (10) ; et
l'unité d'envoi est en outre configurée pour envoyer le message de réponse de carte de déchargement (20) mis à jour au nœud de gestion (30).

10. Carte de déchargement (20) selon la revendication 9, dans laquelle le message de réponse de carte de déchargement (20) comprend en outre une seconde caractéristique de flux de données ; et
l'unité de détermination est en outre configurée pour :
lorsqu'il est déterminé que la seconde caractéristique de flux de données est la caractéristique de flux de données de la carte de déchargement (20), déterminer que le message de réponse de carte de déchargement (20) est l'information de réponse envoyée par la carte de déchargement (20).

11. Carte de déchargement (20) selon la revendication 8 ou 9, dans laquelle l'unité de réception est en outre configurée pour recevoir un message de caractéristique de flux de données envoyé par le processeur (202), dans laquelle le message de caractéristique de flux de données comprend la caractéristique de flux de données de la carte de déchargement (20) ; et
le commutateur virtuel (201) comprend en outre :
une unité de sauvegarde, configurée pour sauvegarder la caractéristique de flux de données de la carte de déchargement (20) .

12. Carte de déchargement (20) selon l'une quelconque des revendications 8 à 10, dans laquelle la caractéristique de flux de données de la carte de déchargement (20) indique que la demande de gestion doit être traitée par la carte de déchargement (20), et la caractéristique de flux de données de la carte de déchargement (20) comprend un numéro de port de la carte de déchargement (20) et/ou un identifiant d'un service de gestion de déchargement.

13. Carte de déchargement (20), comprenant un processeur (211) et une mémoire (212), dans laquelle la mémoire (212) est configurée pour stocker un code de programme informatique, dans laquelle le code de programme informatique comprend une instruction, et lorsque le processeur (211) exécute l'instruction, la carte de déchargement (20) est configurée pour réaliser le procédé de transmission de données selon l'une quelconque des revendications 1 à 6.

14. Serveur (10), comprenant une carte de déchargement (20), dans lequel la carte de déchargement (20) est configurée pour :
recevoir une demande de gestion envoyée par un nœud de gestion (30), dans lequel la demande de gestion comprend une adresse de contrôle d'accès au support, MAC, de destination, et l'adresse MAC de destination est une adresse MAC d'un serveur (10) ;
déterminer si la demande de gestion doit être traitée par la carte de déchargement (20) ;
lorsque le commutateur virtuel (201) détermine que la demande de gestion doit être traitée par la carte de déchargement (20), mettre à jour la demande de gestion, et obtenir une demande de gestion mise à jour, dans lequel l'adresse MAC de destination dans la demande de gestion mise à jour est une adresse MAC de la carte de déchargement (20) ; et
envoyer la demande de gestion mise à jour au processeur (211).

15. Serveur (10) selon la revendication 14, dans lequel la carte de déchargement (20) est configurée pour :
lorsque le commutateur virtuel (201) détermine que la première caractéristique de flux de données est une caractéristique de flux de données de la carte de déchargement (20), déterminer que la demande de gestion doit être traitée par la carte de déchargement (20).
